# EUROPEAN PATENT APPLICATION

(11) **EP 4 163 047 A1**
(43) Date of publication of application: **12.04.2023**
(21) Application number: 20939053.3
(22) Date of filing: 04.06.2020
(51) Int. Cl.: B23K 26/082

(54) **PROCESSING APPARATUS**

(71) Applicant: NIKON CORPORATION, Minato-ku Tokyo 108-6290 (JP)
(72) Inventor: NAITO, Kaneyuki, Tokyo 108-6290 (JP)
(74) Representative: Hoffmann Eitle
(86) International application number: PCT/JP2020/022044
(87) International publication number: WO 2021/245861

(57) **Abstract**

A processing apparatus includes: a beam irradiation apparatus that is configured to irradiate an object with an energy beam; and a beam deflection apparatus that is configured to change a propagating direction of the energy beam toward the beam irradiation apparatus, wherein when the energy beam propagating toward the beam irradiation apparatus from the beam deflection apparatus propagates in a first direction, the beam irradiation apparatus emits the energy beam in a second direction, and when the energy beam propagating toward the beam irradiation apparatus from the beam deflection apparatus propagates in a third direction that is different from the first direction, the beam irradiation apparatus emits the energy beam in a fourth direction that is different from the second direction.

## Description

### Technical Field

The present invention relates to a processing apparatus that is configured to process an object with a processing light.

### Background Art

As a processing apparatus that is configured to process an object, Patent literature 1 discloses a processing apparatus that is configured to form a structure by irradiating a surface of the object with a processing beam. This type of processing apparatus is required to properly process the object.

### Citation List

### Patent Literature

Patent literature 1: US2005/0103763A1

### Summary of Invention

A first aspect provides a processing apparatus that is configured to process an object, including: a beam irradiation apparatus that is configured to irradiate the object with an energy beam; and a beam deflection apparatus that is configured to change a propagating direction of the energy beam toward the beam irradiation apparatus, wherein when the energy beam propagating toward the beam irradiation apparatus from the beam deflection apparatus propagates in a first direction, the beam irradiation apparatus emits the energy beam in a second direction, and when the energy beam propagating toward the beam irradiation apparatus from the beam deflection apparatus propagates in a third direction that is different from the first direction, the beam irradiation apparatus emits the energy beam in a fourth direction that is different from the second direction.

A second aspect provides a processing apparatus that is configured to process an object, including: a beam irradiation apparatus that includes a condensing optical system that condenses an energy beam and that is configured to irradiate the object with the condensed energy beam; and a beam deflection apparatus that is configured to change an emitting position of the energy beam emitted from the condensing optical system, wherein when the energy beam is emitted from a first emitting position of the condensing optical system, the beam irradiation apparatus emits the energy beam in a first direction, and when the energy beam is emitted from a second emitting position of the condensing optical system that is different from the first emitting position, the beam irradiation apparatus emits the energy beam in a second direction that is different from the first direction.

A third aspect provides a processing apparatus that is configured to process an object, including: a beam irradiation apparatus that is configured to irradiate the object with an energy beam, and a polarization state change apparatus that is configured to change a polarization state of the energy beam propagating toward the beam irradiation apparatus, wherein when the energy beam propagating toward the beam irradiation apparatus from the polarization state change apparatus is in a first polarization state, the beam irradiation apparatus emits the energy beam in a first direction, and when the energy beam propagating toward the beam irradiation apparatus from the polarization state change apparatus is in a second polarization state that is different from the first polarization state, the beam irradiation apparatus emits the energy beam in a second direction that is different from the first direction.

A fourth aspect provides a processing apparatus that is configured to process an object, including: a beam irradiation apparatus that is configured to irradiate the object with an energy beam; and a beam state change apparatus that is configured to change a state of the energy beam propagating toward the beam irradiation apparatus, wherein when the energy beam propagating toward the beam irradiation apparatus from the beam state change apparatus is in a first state, the beam irradiation apparatus emits the energy beam in a first direction, and when the energy beam propagating toward the beam irradiation apparatus from the beam state change apparatus is in a second state that is different from the first state, the beam irradiation apparatus emits the energy beam in a second direction that is different from the first direction.

A fifth aspect provides a processing apparatus that is configured to process an object, including: a beam irradiation apparatus including a condensing optical system that condenses an energy beam, and an emission optical system that changes a propagating direction of the energy beam from the condensing optical system to irradiate the object with it; an object support apparatus including a support surface on which the object is supported; and an inclination apparatus that is configured to incline at least a part of the beam irradiation apparatus with respect to the support surface.

### Brief Description of Drawings

[FIG. 1] FIG. 1 is a perspective view that schematically illustrates an overall configuration of a processing system in a first example embodiment.
[FIG. 2] FIG. 2 is a system configuration diagram that illustrates a system configuration of the processing system in the first example embodiment.
[FIG. 3] FIG. 3 is a cross-sectional view that illustrates a configuration of a processing head in the first example embodiment.
[FIG. 4] FIG. 4 is a cross-sectional view that illustrates an optical path of a processing light applied to a workpiece through an fθ lens and a conical mirror.
[FIG. 5] FIG. 5 is a perspective view that illustrates the conical mirror.
[FIG. 6] FIG. 6 is a perspective view that illustrates an area that is irradiated with the processing light emitted from an objective optical system.
[FIG. 7] FIG. 7 is a cross-sectional view that illustrates the area that is irradiated with the processing light emitted from the objective optical system.
[FIG. 8] FIG. 8 is a perspective view that illustrates an example of a shape change optical system.
[FIG. 9] FIG. 9 is a perspective view that illustrates another example of the shape change optical system.
[FIG. 10] FIG. 10 is a cross-sectional view that schematically illustrates the processing system that performs a processing operation.
[FIG. 11] FIG. 11 is a cross-sectional view that schematically illustrates the processing system that performs the processing operation.
[FIG. 12] FIG. 12 is a cross-sectional view that schematically illustrates the processing system that performs the processing operation.
[FIG. 13] FIG. 13 is a cross-sectional view that schematically illustrates the processing system that performs the processing operation.
[FIG. 14] FIG. 14 is a cross-sectional view that schematically illustrates the processing system that performs the processing operation.
[FIG. 15] FIG. 15 is a cross-sectional view that illustrates a configuration of a processing head in a second example embodiment.
[FIG. 16] FIG. 16 is a cross-sectional view that illustrates another example of the configuration of the processing head in the second example embodiment.
[FIG. 17] FIG. 17 is a perspective view that illustrates a pyramid mirror in a third example embodiment.
[FIG. 18] FIG. 18 is a perspective view that illustrates a pyramid mirror in the third example embodiment.
[FIG. 19] FIG. 19 is a cross-sectional view that illustrates a configuration of an objective optical system in a fourth example embodiment.
[FIG. 20] FIG. 20 is a cross-sectional view that illustrates a configuration of an objective optical system in a fifth example embodiment.
[FIG. 21] FIG. 21 is a cross-sectional view that illustrates structures of a state control optical system and an objective optical system in a sixth example embodiment.
[FIG. 22] FIG. 22 is a cross-sectional view that illustrates the configuration of the state control optical system and the objective optical system in the sixth example embodiment.
[FIG. 23] FIG. 23 is a cross-sectional view that illustrates the configuration of the state control optical system and the objective optical system in the sixth example embodiment.
[FIG. 24] FIG. 24 is a cross-sectional view that illustrates another example of the configuration of the objective optical system in the sixth example embodiment.
[FIG. 25] FIG. 25 is a cross-sectional view that illustrates a configuration of an objective optical system in a seventh example embodiment.
[FIG. 26] FIG. 26 is a cross-sectional view that illustrates a configuration of an objective optical system in an eighth example embodiment.
[FIG. 27] FIG. 27 is a cross-sectional view that illustrates a configuration of an objective optical system in a ninth example embodiment.
[FIG. 28] FIG. 28 is a cross-sectional view that illustrates a configuration of an objective optical system in a tenth example embodiment.
[FIG. 29] FIG. 29 is a cross-sectional view that illustrates a configuration of an objective optical system in an eleventh example embodiment.
[FIG. 30] FIG. 30 is a perspective view that illustrates a part of an optical system of a processing system in a modified example.

### Description of Example embodiments

Hereinafter, a processing apparatus according to example embodiments will be described with reference to the drawings. In the below described description, the processing apparatus according to example embodiments will be described by using a processing system SYS that is configured to process a workpiece W with a processing light EL. However, the present invention is not limited to the example embodiments described below.

Furthermore, in the below described description, a positional relationship of various components that constitute the processing system SYS will be described by using an XYZ rectangular coordinate system that is defined by an X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction perpendicular to the horizontal plane, and substantially an up-down direction), for the purpose of simple description, in the below described description. Furthermore, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Processing system SYSa in First Example Embodiment

Firstly, the processing system SYS in a first example embodiment (in the below described description, the processing system SYS in the first example embodiment is referred to as a "processing system SYSa") will be described.

### (1-1) Overall Configuration of Processing system SYSa

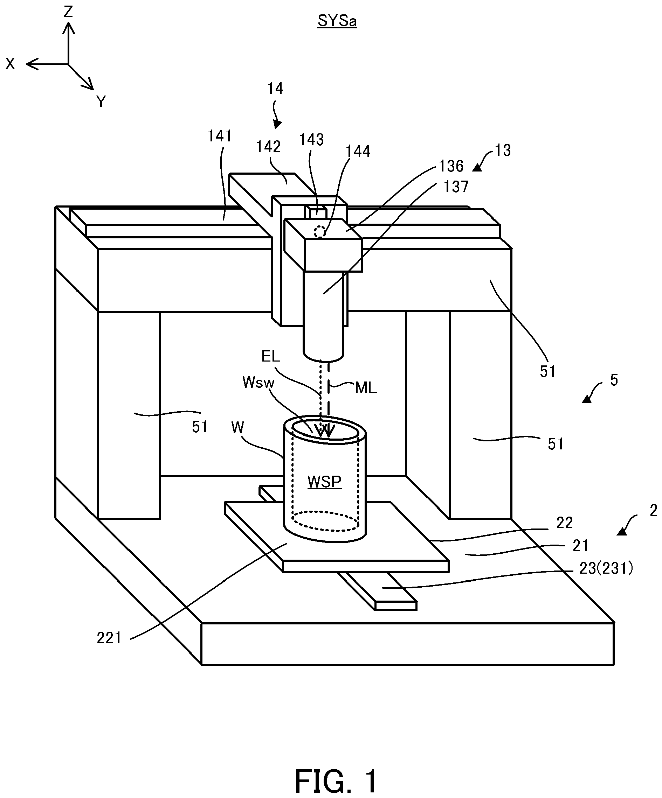

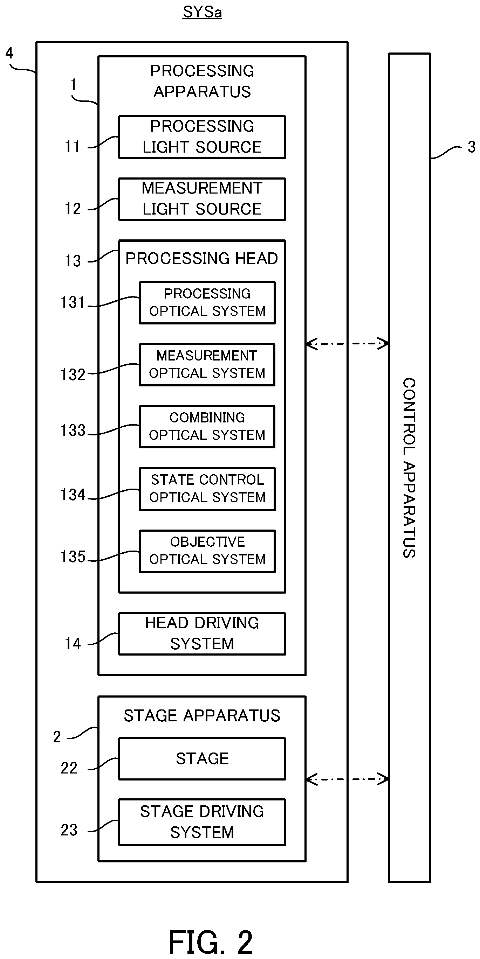

Firstly, with reference to FIG. 1 and FIG. 2, a configuration of the processing system SYSa in the first example embodiment will be described. FIG. 1 is a perspective view that schematically illustrates the configuration of the processing system SYSa in the first example embodiment. FIG. 2 is a system configuration diagram that illustrates a system configuration of the processing system SYSa in the first example embodiment.

As illustrated in FIG. 1 and FIG. 2, the processing system SYSa includes a processing apparatus 1, a stage apparatus 2, and a control apparatus 3. The processing apparatus 1 and the stage apparatus 2 are contained in a housing 4. However, the processing apparatus 1 and the stage apparatus 2 may not be contained in the housing 4. That is, the processing system SYSa may not include the housing 4 in which the processing apparatus 1 and the stage apparatus 2 are contained.

The processing apparatus 1 is configured to processes the workpiece W under the control of the control apparatus 3. The workpiece W is an object to be processed by the processing apparatus 1. The workpiece W may be a metal, may be an alloy (e.g., a duralumin and the like), may be a semiconductor (e.g., a silicon), may be a resin, may be a composite material such as a CFRP (Carbon Fiber Reinforced Plastic), may be a paint (e.g., a paint layer applied to a substrate), may be a glass, or may be an object that is made from any other material, for example.

The processing apparatus 1 irradiates the workpiece W with the processing light EL in order to process the workpiece W. The processing light EL may be any type of light, as long as the workpiece W is processible by irradiating the workpiece W with it. In the first example embodiment, an example in which the processing light EL is a laser light will be described; however, the processing light EL may be a light of a different type from the laser light. Furthermore, the processing light EL may have any wavelength, as long as the workpiece W is processible by irradiating the workpiece W with it. For example, the processing light EL may be a visible light, or an invisible light (e.g., at least one of an infrared light, an ultraviolet light and an extreme ultraviolet light). The processing light EL may include a pulsed light (e.g., a pulsed light with a light emission time of pico-seconds or less). Alternatively, the processing light EL may not include the pulsed light. In other words, the processing light EL may be a continuous light.

The processing apparatus 1 may perform a removal processing for removing a part of the workpiece W by irradiating the workpiece W with the processing light EL. When the removal processing is performed, the processing apparatus 1 may form a riblet structure on the workpiece W. The riblet structure may include a structure by which a resistance (especially, at least one of a frictional resistance and a turbulent frictional resistance) of the surface of the workpiece W to a fluid is reducible. The riblet structure may include a structure by which a noise, which is generated when the fluid and the surface of the workpiece W relatively move, is reducible. The riblet structure may include a structure in which a plurality of grooves, each of which extends along a first direction (e.g., the Y axis direction) that is along the surface of the workpiece W, are arranged along a second direction (e.g., the X axis direction) that is along the surface of the workpiece W and that intersects with the first direction, for example. Note that the fluid here means a medium that flows with respect to the surface of the workpiece W (e.g., at least one of a gas and a liquid). For example, when the surface of the workpiece W moves with respect to the medium in a situation in which the medium itself is at rest, the medium may be referred to as the fluid.

When the removal processing is performed, the processing system SYSa may form any structure of any shape on the surface of the workpiece W. An example of any structure is a structure for generating a swirl relative to a flow of the fluid on the surface of the workpiece W. Another example of any structure is a structure for giving a hydrophobic property to the surface of the workpiece W. Another example of any structure is a fine texture structure (typically, a concave and convex structure) that is formed regularly or irregularly in a micro / nano-meter order. This fine texture structure may include at least one of a shark skin structure and a dimple structure that has a function of reducing a resistance from a fluid (a liquid and / or a gas). The fine texture structure may include a lotus leaf surface structure that has at least one of a liquid repellent function and a self-cleaning function (e.g., has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improve an adhesion to a layer formed on the surface, a concave and convex structure for reducing a frictional resistance, and so on. The processing system SYSa may smooth the surface of the workpiece W. Here, if the surface after processing is smoother than the surface before processing, the processing of the surface may be referred to as smoothing. Furthermore, the processing system SYSa may remove burrs on the surface of the workpiece W.

The processing apparatus 1 may perform an additive processing for adding a new structural object to the workpiece W by irradiating the workpiece W with the processing light EL, in addition to or instead of the removal processing. In this case, the processing apparatus 1 may form the above-described riblet structure on the surface of the workpiece W by performing the additive processing. The processing apparatus 1 may perform a marking processing of forming a desired mark on the surface of the workpiece W by irradiating the workpiece W with the processing light EL, in addition or instead of at least one of the removal processing and the additive processing.

Furthermore, the processing apparatus 1 is configured to measure the workpiece W under the control of the control apparatus 3. The processing apparatus 1 irradiates the workpiece W with a measurement light ML in order to measure the workpiece W. The measurement light ML may be any type of light, as long as the workpiece W is measurable by irradiating the workpiece W with it. In the first example embodiment, an example in which the measurement light ML is a laser light will be described; however, the measurement light ML may be a light of a different type from the laser light. Furthermore, the measurement light ML may have any wavelength, as long the workpiece W is measurable by irradiating the workpiece W with it. For example, the measurement light ML may be a visible light, or an invisible light (e.g., at least one of an infrared light, an ultraviolet light and an extreme ultraviolet light). The measurement light ML may include a pulsed light (e.g., a pulsed light with a light emission time of pico-seconds or less). Alternatively, the measurement light ML may not include the pulsed light. In other words, the measurement light ML may be a continuous light.

The wavelength of the measurement light ML may be different from the wavelength of the processing light EL. For example, the wavelength of the measurement light ML may be shorter than the wavelength of the processing light EL. As an example, a light having a wavelength of 266 nm or 355 nm may be used as the measurement light ML, and a light having a wavelength of 532 nm, 1 µm or 10 µm may be used as the processing light EL. In this case, a diameter of a spot of the measurement light ML on the workpiece W is smaller than a diameter of a spot of the processing light EL on the workpiece W. As a result, a measurement resolution by the measurement light ML is higher than a processing resolution by the processing light EL. The wavelength of the measurement light ML may not be shorter than the wavelength of the processing light EL. The wavelength of the measurement light ML may be the same as that of the processing light EL.

The processing apparatus 1 may be configured to measure a state of the workpiece W by using the measurement light ML. The state of the workpiece W may include a position of the workpiece W. The position of the workpiece W may include a position of the surface of the workpiece W. The position of the surface of the workpiece W may include a position of each surface part, which is obtained by segmentalizing the surface of the workpiece W, in at least one of the X axis direction, the Y axis direction and the Z axis direction. The position of the surface of the workpiece W may include a position of each surface part, which is obtained by segmentalizing the surface of the workpiece W, in at least one of the θX direction, the θY direction and the θZ direction. The position of each surface part in at least one of the θX direction, the θY direction and the θZ direction may be considered to be equivalent to a posture of each surface part (which is, namely, a direction of each surface part (e.g., a direction of a normal line of each surface part), and which is substantially equivalent to an amount of inclination of each surface part with respect to at least one of the X axis, the Y axis and the Z axis). In this case, it can be said that the state of the workpiece substantially includes a shape (e.g., a three-dimensional shape) of the workpiece W. The state of the workpiece W may also include a size (e.g., a size in at least one of the X axis direction, the Y axis direction and the Z axis direction) of the workpiece W. Furthermore, the processing apparatus 1 may be configured to measure properties of the workpiece W by using the measurement light ML. The properties of the workpiece W may include at least one of surface roughness and reflectance of the surface of the workpiece W.

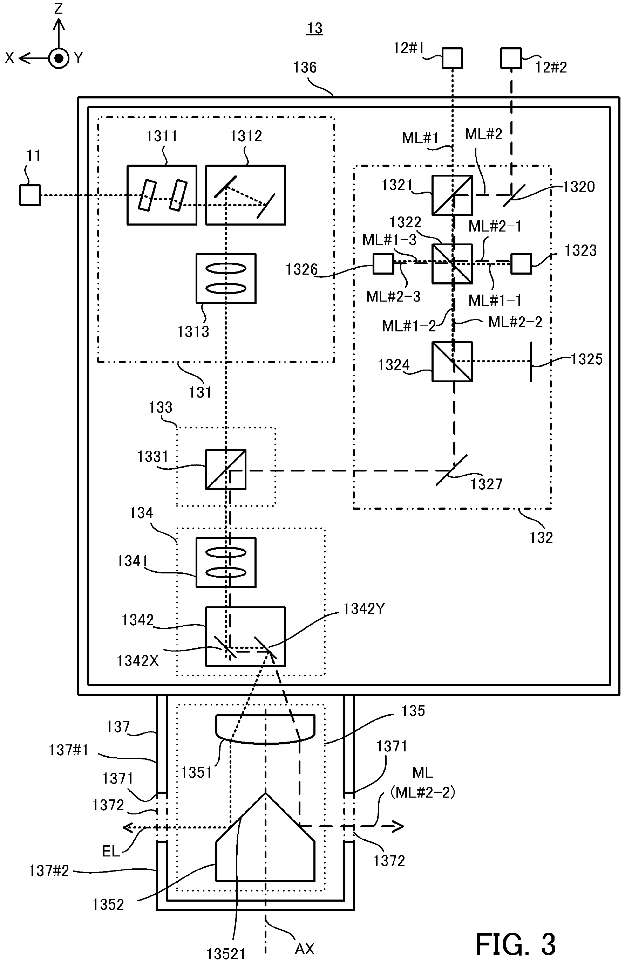

In order to process and measure the workpiece W, the processing apparatus 1 includes a processing light source 11 that is configured to generate the processing light EL, a measurement light source 12 that is configured to generate the measurement light ML, a processing head 13 that is configured to irradiate the workpiece W with the processing light EL from the processing light source 11 and to irradiate the workpiece W with the measurement light ML from the measurement light source 12, and, a head driving system 14 that is configured to move the processing head 13. Furthermore, the processing head 13 includes a processing optical system 131, a measurement optical system 132, a combining optical system 133, a state control optical system 134, and an objective optical system 135. A configuration of the processing head 13 will be described in detail later with reference to FIG. 3.

The processing optical system 131, the measurement optical system 132, the combining optical system 133 and the state control optical system 134 of the processing head 13 are contained in a head housing 136. The objective optical system 135 of the processing head 13 is contained in a head housing 137. However, at least a part of the processing optical system 131, the measurement optical system 132, the combining optical system 133 and the state control optical system 134 may not be contained in the head housing 136. At least a part of the objective optical system 135 may not be contained in the head housing 137. The head housing 137 may be referred to as a probe.

The head housing 137 is connected to the head housing 136. The head housing 137 is coupled on a lower side (i.e., -Z side) of the head housing 136. The head housing 137 is disposed at a position that is closer to a stage 22 described later (furthermore, the workpiece W placed on the stage 22) than to the head housing 136. The head housing 137, as described in detail later, has a shape that allows insertion into a space WSP formed on the workpiece W. In the example illustrated in FIG. 1, the space WSP of a cylindrical shape that extends along the Z axis direction and that is surrounded by a cylindrical inner wall surface (i.e., a side surface) Wsw extending along the Z axis direction, is formed in the workpiece W. In this case, the head housing 137 may have a shape that allows insertion into the cylindrical space WSP (e.g., a cylindrical shape extending along the Z axis direction). The space WSP may include a through hole that penetrates the workpiece W. Alternatively, the space WSP may include a recess or concave part that does not penetrate the workpiece W but is recessed from the surface of the workpiece W. The processing head 13 may process and measure the workpiece W while the head housing 137 is inserted into the space WSP of the workpiece W. On the other hand, the head housing 136, which is connected on an upper side (i.e., +Z side) of the head housing 137, may not be inserted into the space WSP of the workpiece W.

The head driving system 14 moves (i.e., transports) the processing head 13 under the control of the control apparatus 3. The head driving system 14 may move the processing head 13 with respect to at least one of a surface plate 21 and the stage 22 of the stage apparatus 2 described later (furthermore, the workpiece W placed on the stage 22).

The head driving system 14 moves the processing head 13 along at least one of the X axis direction, the Y axis direction, the Z axis direction, the θX direction, the θY direction and the θZ direction. Therefore, the head driving system 14 may be referred to as a moving apparatus. Moving the processing head 13 along at least one of the θX direction, the θY direction and the θZ direction may be considered to be equivalent to changing a posture of the processing head 13 around at least one of the X axis, the Y axis and the Z axis. FIG. 1 illustrates an example in which the head driving system 14 moves the processing head 13 along each of the X axis direction, the Z axis direction and the θY direction. In this case, the head driving system 14 includes, for example, an X slider member 141 that extends along the X axis direction, an X stage member 142 that is connected to the X slider member 141 so as to be movable along the X slider member 141, and a Z slider member 143 that is connected to the X stage member 142 through a Y rotating shaft 144 so as to be rotatable around the Y axis and that extends along the Z axis direction. The X slider member 141 is disposed at a support frame 5 that is disposed on the surface plate 21 through a vibration isolator. The support frame 5 includes, for example, a pair of leg members 51 that is disposed on the surface plate 21 through the vibration isolator and that extends along the Z axis direction, and a beam member 52 that is disposed on the pair of leg members 51 so as to couple upper end parts of the pair of leg members 51 and that extends along the X axis direction. The X slider member 141 is disposed, for example, at the beam member 52. The processing head 13 (or the head housing 136 of the processing head 13 in the example illustrated in FIG. 1) is connected to the Z slider member 143 so as to be movable along the Z slider member 143. When the X stage member 142 moves along the X slider member 141, the processing head 13 connected to the X stage member 142 through the Z slider member 143 moves along the X axis direction. Furthermore, the processing head 13 moves along the Z slider member 143. Therefore, the processing head 13 is movable along each of the X axis direction and the Z axis direction. Furthermore, when the Z slider member 143 is rotated around the Y axis, the processing head 13 connected to the Z slider member 143 is rotated around the Y axis. In this case, since the Z slider member 143 extends along a direction inclined to the Z axis, the processing head 13 is movable along the direction inclined to the Z axis.

When the processing head 13 moves, a positional relationship changes between the processing head 13 and the stage 22 (furthermore, the workpiece W placed on the stage 22). That is, when the processing head 13 moves, a relative position changes between the processing head 13 and each of the stage 22 and the workpiece W. Therefore, moving the processing head 13 is equivalent to changing the positional relationship between the processing head 13 and each of the stage 22 and the workpiece W. Furthermore, when the positional relationship changes between the processing head 13 and each of the stage 22 and the workpiece W, a positional relationship changes between each of the optical systems of the processing head 13 (i.e., at least one of the processing optical system 131, the measurement optical system 132, the combining optical system 133, the state control optical system 134 and the objective optical system 135) and respective one of the stage 22 and the workpiece W. Therefore, moving the processing head 13 is equivalent to changing the positional relationship between each of the optical systems of the processing head 13 and respective one of the stage 22 and the workpiece W. Moving the processing head 13 is equivalent to moving each of the optical systems of the processing head 13. Furthermore, when the positional relationship changes between the processing head 13 and each of the stage 22 and the workpiece W, respective irradiation positions of the processing light EL and the measurement light ML on the workpiece W change. Therefore, moving the processing head 13 is equivalent to changing the respective irradiation positions of the processing light EL and the measurement light ML on the workpiece W.

The stage apparatus 2 includes the surface plate 21, the stage 22, and a stage driving system 23.

The surface plate 21 is disposed on a bottom surface of the housing 4 (alternatively, on a support surface such as a floor surface on which the housing 4 is placed). The stage 22 is disposed on the surface plate 21. A not-illustrated vibration isolator for reducing a transmission of vibration of the surface plate 21 to the stage 22 may be disposed between the surface plate 21 and the bottom surface of the housing 4 or the support surface such as the floor surface on which the housing 4 is placed. Furthermore, the above-described support frame 5 for supporting the processing apparatus 1 (especially, the processing head 13 and the head driving system 14) may be disposed on the surface plate 21.

The workpiece W is placed on the stage 22. Specifically, the workpiece W is placed on a support surface 221 of the stage 22 on which the workpiece W can be supported. The stage 22 supports the workpiece W placed on the stage 22 through the support surface 221. For this reason, the stages 22 may be referred to as an object support apparatus. The support surface 221 is, for example, a surface facing the processing head 13. The support surface 221 is, for example, a surface along the XY plane. The stage 22 may not hold the workpiece W placed on the support surface 221. That is, the stage 22 may not apply a holding force for holding the workpiece W, to the workpiece W placed on the support surface 221. Alternatively, the stage 22 may hold the workpiece W placed on the support surface 221. That is, the stage 22 may apply a holding force for holding the workpiece W to the workpiece W placed on the support surface 221. For example, the stage 22 may hold the workpiece W by vacuum-sucking and/or electrostatically sucking the workpiece W.

The stage driving system 23 moves the stage 22 along at least one of the X axis direction, the Y axis direction, the Z axis direction, the θX direction, the θY direction and the θZ direction. Moving the stage 22 along at least one of the θX direction, the θY direction and the θZ direction may be considered to be equivalent to changing a posture of the stage 22 (furthermore, the workpiece W placed on the stage 22) around at least one of the X axis, the Y axis and the Z axis. Alternatively, moving the stage 22 along at least one of the θX direction, the θY direction and the θZ direction may be considered to be equivalent to rotating (or rotationally moving) the stage 22 around at least one of the X axis, the Y axis and the Z axis. FIG. 1 illustrates an example in which the stage driving system 23 moves the stage 22 along the Y axis direction. In this case, the stage driving system 23 includes, for example, at least one Y-slider member 231that is disposed on the surface plate 21 through a vibration isolator and that extends along the Y axis direction. The stage 22 is connected to the Y slider member 231 so as to be movable along the Y slider member 231. As a result, the stage 22 is movable along the Y axis direction. The stage 22 may be configured to be floating-supported by an air bearing on the surface plate 21.

When the stage 22 moves, the positional relationship changes between the processing head 13 and the stage 22 (furthermore, the workpiece W placed on the stage 22). That is, when the stage 22 moves, the relative position changes between the processing head 13 and each of the stage 22 and the workpiece W. Therefore, moving the stage 22 is equivalent to changing the positional relationship between the processing head 13 and each of the stage 22 and the workpiece W. Furthermore, when the positional relationship changes between the processing head 13 and each of the stage 22 and the workpiece W, the positional relationship changes between each of the optical systems of the processing head 13 and respective one of the stage 22 and the workpiece W. Therefore, moving the stage 22 is equivalent to changing the positional relationship between each of the optical systems of the processing head 13 and respective one of the stage 22 and the workpiece W. Furthermore, when the positional relationship changes between the processing head 13 and each of the stage 22 and the workpiece W, the respective irradiation positions of the processing light EL and the measurement light ML on the workpiece W change. Therefore, moving the stage 22 is equivalent to changing the respective irradiation positions of the processing light EL and the measurement light ML on the workpiece W.

The control apparatus 3 controls the operation of the processing system SYSa. For example, the control apparatus 3 sets a processing condition of the workpiece W, and controls the processing apparatus 1 and the stage apparatus 2 such that the workpiece W is processed based on the set processing condition. For example, the control apparatus 3 sets a measurement condition of the workpiece W, and controls the processing apparatus 1 and the stage apparatus 2 such that the workpiece W is measured based on the set measurement condition.

The control apparatus 3 may include an arithmetic apparatus and a storage apparatus, for example. The arithmetic apparatus may include at least one of a CPU (Central Processing Unit) and a GPU (Graphics Processing Unit), for example. The control apparatus 3 serves as an apparatus that controls the operation of the processing system SYSa by means of the arithmetic apparatus executing a computer program. The computer program is a computer program that allows the control apparatus 3 (e.g., the arithmetic apparatus) to execute (i.e., to perform) a below-described operation that should be executed by the control apparatus 3. That is, the computer program is a computer program that allows the control apparatus 3 to function so as to make the processing system SYSa execute the below-described operation. The computer program executed by the arithmetic apparatus may be recorded in the storage apparatus (i.e., a recording medium) of the control apparatus 3, or may be recorded in any storage medium (e.g., a hard disk or a semiconductor memory) that is built in the control apparatus 3 or that is externally attachable to the control apparatus 3. Alternatively, the arithmetic apparatus may download the computer program that should be executed from an apparatus disposed at the outside of the control apparatus 3 through a network interface.

The control apparatus 3 may not be disposed in the processing system SYSa. For example, the control apparatus 3 may be disposed at the outside of the processing system SYSa as a server or the like. In this case, the control apparatus 3 may be connected to the processing system SYSa through a wired and/or wireless network (or a data bus and/or a communication line). A network using a serial-bus-type interface represented, for example, by at least one of IEEE1394, RS-232x, RS-422, RS-423, RS-485 and a USB may be used as the wired network. A network using a parallel-bus-type interface may be used as the wired network. A network using an interface that is compatible to Ethernet represented by at least one of 10BASE-T, 100BASE-TX and 1000BASE-T may be used as the wired network. A network using an electrical wave may be used as the wireless network. An example of the network using an electrical wave is a network that is compatible to IEEE802.1x (e.g., at least one of a wireless LAN and Bluetooth (registered trademark)). A network using an infrared ray may be used as the wireless network. A network using an optical communication may be used as the wireless network. In this case, the control apparatus 3 and the processing system SYSa may be configured to transmit and receive various information through the network. Furthermore, the control apparatus 3 may be configured to transmit information such as a command and a control parameter to the processing system SYSa through the network. The processing system SYSa may include a receiving apparatus that receives the information such as the command and the control parameter from the control apparatus 3 through the network. Alternatively, a first control apparatus that is configured to perform a part of a process performed by the control apparatus 3 is disposed in the processing system SYSa, and a second control apparatus that performs another part of the process performed by the control apparatus 3 may be disposed at the outside of the processing system SYSa.

Note that at least one of an optical disk such as a such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic medium such as a magnetic tape, an optical-magnetic disk, semiconductor memory such as a USB memory, and another medium that is configured to store the program may be used as a recording medium for recording therein the computer program that is executed by the arithmetic apparatus. The recording medium may include a device that is configured to record the computer program (e.g., a device for a universal use or a device for an exclusive use in which the computer program is embedded to be executable in a form of at least one of a software, a firmware and the like). Furthermore, each process or function included in the computer program may be realized by a logical processing block that is realized in the control apparatus 3 by means of the control apparatus 3 (i.e., a computer) executing the computer program, may be realized by a hardware such as a predetermined gate array (a FPGA, an ASIC) of the control apparatus 3, or may be realized in a form in which the logical processing block and a partial hardware module that realizes a partial element of the hardware are combined.

### (1-2) Configuration of Processing Head 13

Next, with reference to FIG. 3, an example of the configuration of the processing head 13 will be described. FIG. 3 is a cross-sectional view that illustrates an example of the configuration of the processing head 13.

As illustrated in FIG. 3, the processing light EL generated by the processing light source 11 enters the processing head 13 through a light transmitting member such as an optical fiber. The processing light source 11 is configured to generate the processing light EL. When the processing light EL is a laser light, the processing light source 11 may include a laser diode, for example. Furthermore, the processing light source 11 may be a light source that is configured to allow pulse oscillation. In this case, the processing light source 11 is configured to generate a pulsed light (e.g., a pulsed light with a light emission time of pico-seconds or less) as the processing light EL. The processing light source 11 may be a CW light source that generates a CW (continuous wave).

The processing optical system 131 is an optical system entered by the processing light EL from the processing light source 11. The processing optical system 131 is an optical system that emits, toward the combining optical system 133, the processing light EL entering the processing optical system 131. The workpiece W is irradiated with the processing light EL emitted from the processing optical system 131 through the combining optical system 133, the state control optical system 134 and the objective optical system 135.

The processing optical system 131 may include, for example, a position adjustment optical system 1311, an angle adjustment optical system 1312, and a condensed position adjustment optical system 1313. The position adjustment optical system 1311 is configured to adjust an emitting position of the processing light EL from the processing optical system 131. The position adjustment optical system 1311 includes a parallel plate that is configured to incline with respect to a propagating direction of the processing light EL, for example, and may change the emitting position of the processing light EL by changing an inclination angle of the parallel plate. The angle adjustment optical system 1312 is configured to adjust an emitting angle (i.e., an emitting direction) of the processing light EL from the processing optical system 131. The angle adjustment optical system 1312 includes a mirror that is configured to incline with respect to the propagating direction of the processing light EL, for example, and may change the emitting angle of the processing light EL by changing an inclination angle of the mirror. The condensed position adjustment optical system 1313 is an optical member that is configured to adjust a condensed position of the processing light EL in the propagating direction of the processing light EL. The condensed position adjustment optical system 1313 may include a plurality of lenses that are arranged along the propagating direction of the processing light EL, for example. In this case, at least one of the plurality of lenses may move along its optical axis direction, by which the condensed position of the processing light EL is adjusted. Alternatively, the condensed position adjustment optical system 1313 may include an optical member (typically, a Galvano mirror) that is configured to move the condensed position of the processing light EL along a desired direction by deflecting the processing light EL, for example. The processing optical system 131, however, may not include at least one of the position adjustment optical system 1311, the angle adjustment optical system 1312 and the condensed position adjustment optical system 1313.

The processing light EL emitted from the processing optical system 131 enters the combining optical system 133. The combining optical system 133 includes a beam splitter (e.g., a polarized beam splitter) 1331. The beam splitter 1331 emits, toward the state control optical system 134, the processing light EL entering the beam splitter 1331. In the example illustrated in FIG. 3, the processing light EL entering the beam splitter 1331 passes through a polarization split surface of the beam splitter 1331 to be emitted toward the state control optical system 134. Thus, in the example illustrated in FIG. 3, the processing light EL enters the polarization split surface of the beam splitter 1331 in a state where it has a polarized direction by which it is allowed to pass through the polarization split surface (e.g., a polarized direction by which it is a p-polarized light with respect to the polarization split surface).

The state control optical system 134 includes a shape change optical system 1341 and a Galvano mirror 1342. The processing light EL emitted from the beam splitter 1331 enters the shape change optical system 1341. The shape change optical system 1341 is an optical system that is configured to change the shape of the processing light EL in a plane intersecting with the propagating direction of the processing light EL (i.e., the cross-sectional shape of the processing light EL), under the control of the control apparatus 3. The shape change optical system 1341 may be referred to as a beam shape change apparatus.

The processing light EL emitted from the shape change optical system 1341 enters the Galvano mirror 1342. The Galvano mirror 1342 deflects the processing light EL (i.e., changes the emitting angle of the processing light EL). For this reason, the Galvano mirror 1342 may be referred to as a beam deflection apparatus. The Galvano mirror 1342 change a direction in which the processing light EL is emitted from the Galvano mirror 1342, by deflecting the processing light EL. When the direction in which the processing light EL is emitted from the Galvano mirror 1342 is changed, the propagating direction of the processing light EL toward the objective optical system 135 from the Galvano mirror 1342 is changed. Therefore, it may be considered that the Galvano mirror 1342 changes the propagating direction of the processing light EL toward the objective optical system 135 by deflecting the processing light EL. Each of the emitting angle, the emitting direction and the propagating direction of the processing light EL from the Galvano mirror 1342 is a specific example of a state of the processing light EL. Therefore, the Galvano mirror 1342 may be referred to as a beam state change apparatus that is configured to change the state of the processing light EL propagating toward the objective optical system 135.

The Galvano mirror 1342 includes an X scanning mirror 1342X and a Y scanning mirror 1342Y. Each of the X scanning mirror 1342X and the Y scanning mirror 1342Y is an inclination angle variable mirror whose angle relative to an optical path of the processing light EL entering the Galvano mirror 1342 is changed. For example, the X scanning mirror 1342X may be rotatable or swingable around the Y axis. For example, the Y scanning mirror 1342Y may be rotatable or swingable around the X axis.

The processing optical system 131 may include any deflecting optical member that is configured to deflect the processing light EL (i.e., that is configured to change at least one of the emitting angle, the emitting direction and the propagating direction the processing head 13), in addition to or instead of the Galvano mirror 1342. An example of such a deflecting optical member is a polygonal mirror having a plurality of reflection surfaces, angles of which are different from each other. The polygonal mirror is rotatable so as to change an incident angle of the processing light EL with respect to one reflection surface in a period in which the one reflection surface is irradiated with the processing light EL and to switch the reflection surface that is irradiated with the processing light EL between the plurality of reflection surfaces. Another example of such deflecting optical members is at least one of an acousto-optical element, a MEMS mirror, and a two-dimensional mirror that is rotatable (or swingable) in a two-axis direction.

The processing light EL emitted from the Galvano mirror 1342 enters the objective optical system 135. The objective optical system 135 irradiates the workpiece W with the processing light EL emitted from the Galvano mirror 1342. Therefore, the objective optical system 135 may be referred to as a beam irradiation apparatus. Specifically, the objective optical system 135 includes an fθ lens 1351 and a conical mirror 1352. A positional relationship between the fθ lens 1351 and the conical mirror 1352 may be fixed. The processing light EL emitted from the Galvano mirror 1342 enters the fθ lens 1351. The objective optical system 135 (the head housing 137) may be attachable to and detachable from the head housing 136. In this case, the objective optical system 135 (the head housing 137) may be exchangeable with the objective optical system having another configuration.

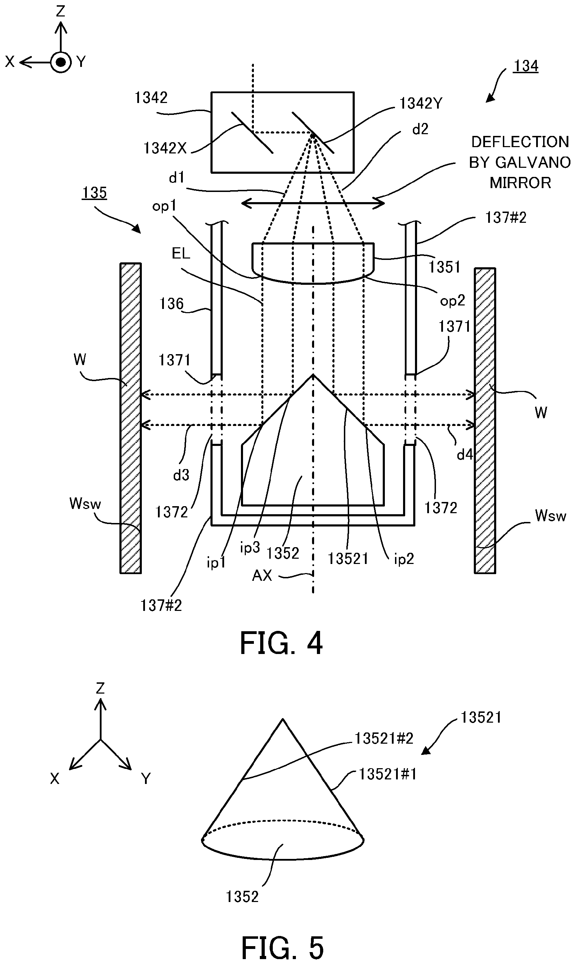

The fθ lens 1351 is an optical system for irradiating the workpiece W with the processing light EL from the Galvano mirror 1342. In particular, the fθ lens 1351 is an optical system for condensing the processing light EL from the Galvano mirror 1342 on the workpiece W. Therefore, the Ffθ lens 1351 may be referred to as a condensing optical system. In the first example embodiment, however, the fθ lens 1351 condenses the processing light EL on the workpiece W through the conical mirror 1352. Here, with reference to FIG. 4 to FIG. 5 in addition to FIG. 3, the processing light EL applied to the workpiece W through the fθ lens 1351 and the conical mirror 1352 will be described. FIG. 4 is a cross-sectional view that illustrates the optical path of the processing light EL applied to the workpiece W through the fθ lens 1351 and the conical mirror 1352. FIG. 5 is a perspective view that illustrates the conical mirror 1352.

As illustrated in FIG. 3 to FIG. 5, the conical mirror 1352 includes a convex reflection surface 13521 corresponding to at least a part of a conical shape. Therefore, as illustrated in FIG. 5, a first part 13521#1 of the reflection surface 13521 and a second part 13521#2 of the reflection surface 13521 that is different from the first part 13521 #1, face in different directions from each other. Furthermore, the reflection surface 13521 is inclined to an optical axis AX of the fθ lens 1351. That is, the reflection surface 13521 includes a surface inclined to the optical axis AX. In the first example embodiment, the optical axis AX is an axis along the Z axis, but may be an axis inclined to the Z axis. Furthermore, the conical mirror 1352 may be disposed such that a convex surface of the reflection surface 13521 faces the fθ lens 1351 side. An apex of the convex reflection surface 13521 may be disposed on the optical axis AX.

The fθ lens 1351 emits the processing light EL toward such a reflection surface 13521. Consequently, the conical mirror 1352 reflects the processing light EL emitted from the fθ lens 1351 toward the workpiece W by using the reflection surface 13521. The conical mirror 1352 emits the processing light EL toward the workpiece W by reflecting the processing light EL emitted from the fθ lens 1351, on the reflection surface 13521. The conical mirror 1352 emits the processing light EL toward the workpiece W by changing the propagating direction of the processing light EL emitted from the fθ lens 1351. The conical mirror 1352 emits the processing light EL toward the workpiece W through the reflection surface 13521. Therefore, the conical mirror 1352 may be referred to as an emission optical system. In particular, since the reflection surface 13521 is inclined to the optical axis AX of the fθ lens 1351, the conical mirror 1352 emits (i.e., reflects) the processing light EL in a direction intersecting with the optical axis AX. Consequently, as illustrated in FIG. 3 and FIG. 4, the conical mirror 1352 is configured to irradiate the surface of the workpiece W that intersects with a plane perpendicular to the optical axis AX, with the processing light EL. For example, when the head housing 137 contained in the conical mirror 1352 is inserted in the space WSP of the workpiece W, the conical mirror 1352 configured to irradiate the inner wall surface Wsw of the workpiece W that defines the space WSP, with the processing light EL.

Especially in the first example embodiment, the processing light EL deflected by the Galvano mirror 1342 enters the fθ lens 1351. That is, the processing light EL whose propagating direction from the Galvano mirror 1342 is changed enters the fθ lens 1351. When the propagating direction of the processing light EL toward the fθ lens 1351 from the Galvano mirror 1342 is changed, an emitting position of the processing light EL from the fθ lens 1351 is changed. Therefore, it may be considered that the Galvano mirror 1342 changes the emitting position of the processing light EL from the fθ lens 1351, by deflecting the processing light EL. When the emitting position of the processing light EL from the fθ lens 1351 is changed, an incident position of the processing light EL on the reflection surface 13521 of the conical mirror 1352 is changed. Therefore, it may be considered that the Galvano mirror 1342 changes the incident position of the processing light EL on the reflection surface 13521, by deflecting the processing light EL. When the incident position of the processing light EL on the reflection surface 13521 is changed, a direction of reflection of the processing light EL by the reflection surface 13521 is changed. That is, when the incident position of the processing light EL on the reflection surface 13521 is changed, the emitting direction (i.e., the propagating direction) of the processing light EL from the reflection surface 13521 is changed. This is because, as described above, the reflection surface 13521 includes the first part 13521#1 and the second part 13521#2 that have a shape corresponding to at least a part of the conical shape and that face in different directions from each other. Therefore, it may be considered that the Galvano mirror 1342 changes the emitting direction of the processing light EL from the conical mirror 1352 (i.e., the emitting direction of the processing light EL from the objective optical system 135) by deflecting the processing light EL.

For example, in the example illustrated in FIG. 4, when the processing light EL going toward the objective optical system 135 from the Galvano mirror 1342 propagates in a first direction d1, the fθ lens 1351 emits the processing light EL from a first emitting position op1. The processing light EL emitted from the first emitting position op1 of the fθ lens 1351 enters at a first incident position ip1 (i.e., the first part) on the reflection surface 13521 of the conical mirror 1352. In this case, the conical mirror 1352 emits (specifically, reflects) the processing light EL in a third directional d3. That is, the objective optical system 135 emits the processing light EL in the third directional d3. On the other hand, when the processing light EL going toward the objective optical system 135 from the Galvano mirror 1342 propagates in a second direction d2 that is different from the first direction d1, the fθ lens 1351 emits the processing light EL from a second emitting position op2 that is different from the first emitting position op1. The processing light EL emitted from the second emitting position op2 of the fθ lens 1351 enters at a second incident position ip2 (i.e., the second part) that is different from the first incident position ip1, on the reflection surface 13521 of the conical mirror 1352. In this case, the conical mirror 1352 emits (specifically, reflects) the processing light EL in a fourth direction d4 that is different from the third direction d3. That is, the objective optical system 135 emits the processing light EL in the fourth directional d4. In the example illustrated in FIG. 4, since the objective optical system 135 is an emission-side telecentric optical system, the propagating direction of the processing light EL from the first emitting position op1 and the propagating direction of the processing light EL from the second emitting position op2 are parallel to each other. As the objective optical system 135, however, a non-telecentric optical system may be used on the emission side.

As described above, the propagating direction (i.e., the emitting direction) of the processing light EL from the Galvano mirror 1342 is a specific example of the state of the processing light EL. In this case, it may be considered that the objective optical system 135 (especially, the conical mirror 1352) emits the processing light EL in a first direction when the processing light EL is in a first state, and that the objective optical system 135 emits the processing light EL in a second direction that is different from the first direction when the processing light EL is in a second state that is different from the first state.

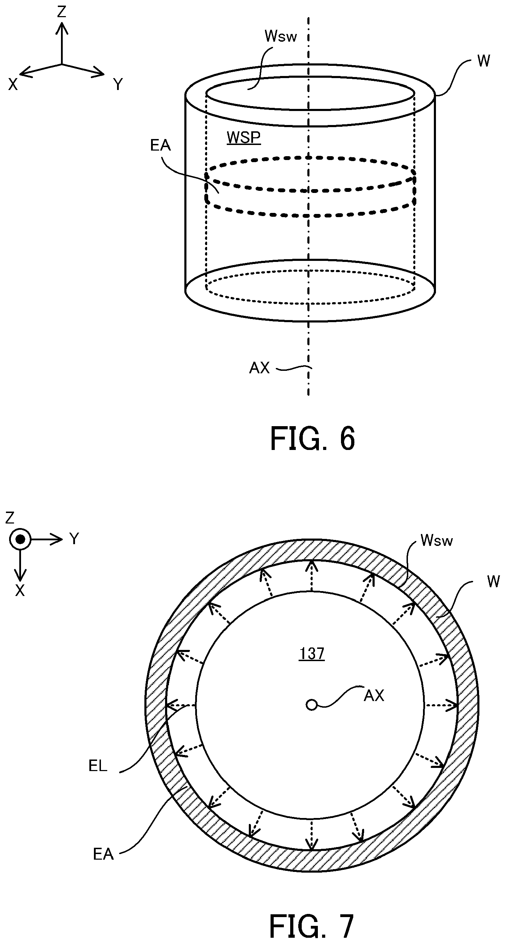

As described above, the objective optical system 135 (specifically, the conical mirror 1352) is configured to emit (specifically, reflect) the processing light EL entering at different incident positions on the reflection surface 13521, respectively in different directions. The objective optical system 135 (specifically, the conical mirror 1352) is configured to change the emitting direction of the processing light EL around the optical axis AX of the fθ lens 1351. Furthermore, when an absolute value of the emitting angle of the processing light EL from the Galvano mirror 1342 is changed because the Galvano mirror 1342 deflects the processing light EL, the incident position of the processing light EL on the reflection surface 13521 is changed in a direction along the optical axis AX. Consequently, a position at which the processing light EL is emitted from the objective optical system 135 varies along an extending direction of the optical axis AX (in the example illustrated in FIG. 4, it varies vertically along the Z axis direction). In the example illustrated in FIG. 4, as the emitting angle of the processing light EL from the Galvano mirror 1342 has a smaller absolute value, the position at which the processing light EL is emitted from the objective optical system 135 moves upward (i.e., to +Z side). Consequently, as illustrated in FIG. 6, which is a perspective view that illustrates an area that is irradiated with the processing light EL emitted from the objective optical system 135, and FIG. 7, which is a cross-sectional view that illustrates the area that is irradiated with the processing light EL emitted from the objective optical system 135, the objective optical system 135 is configured to apply the processing light EL toward at least a part of an annular area EA that surrounds the optical axis of the fθ lens 1351. Therefore, the objective optical system 135 may apply the processing light EL toward at least a part of the inner wall surface Wsw of the workpiece W that surrounds the optical axis AX. That is, the objective optical system 135 is configured to apply the processing light EL toward at least a part of the annular area EA that is set on at least a part of the inner wall surface Wsw of the workpiece W that surrounds the optical axis AX. Furthermore, when the processing head 13 moves along the inner wall surface Wsw of the workpiece W (e.g., along the Z axis), the annular area EA moves on the inner wall surface Wsw of the workpiece W. Therefore, the processing system SYSa is capable of processing the inner wall surface Wsw of the workpiece W over a wide range by alternately repeating an operation of irradiating the annular area EA with the processing light EL and an operation of moving the processing head 13 (and consequently moving the annular area EL on the inner wall surface Wsw of the workpiece W).

As described above, the objective optical system 135 is contained in the head housing 137. Therefore, as illustrated in FIG. 3 and FIG. 4, an opening 1371 through which the processing light EL emitted from the objective optical system 135 can pass, may be formed in the head housing 137. For example, an annular opening 1371 that surrounds the optical axis AX may be formed in the head housing 137 when the processing light EL is applied toward at least a part of the annular area EA that surrounds the optical axis AX as described above. However, when the opening 1371 is formed over a range of 360 degrees surrounding the optical axis AX, an upper part 137#1 that is located above the opening 1371 of the head housing 137 and that is configured to mainly support the fθ lens 1351 and a lower part 137#2 that is located below the opening 1371 of the head housing 137 and that is configured to mainly support the conical mirror 1352 may be physically separated. As a result, the lower part 137#2 may be physically separated from the head housing 136 and the lower part 137#2 (and even the conical mirror 1352) may not be supported. Therefore, a support member 1372 through which the processing light EL can pass and that is configured to connect the upper part 137 #1 and the lower part 137 #2 may be disposed in at least a part of the opening 1371. The support member 1372 may be a light transmitting passing member having a cylindrical shape.

The processing system SYSa may also make a gas for cooling the fθ lens 1351 flow into the head housing 137. The processing system SYSa may also eject the gas that is made flow into the head housing 137, from the opening 1371 of the head housing 137. The processing system SYSa may reduce adhesion to the optical member such as a fume, which may occur when the workpiece W is irradiated with the processing light EL, by using the gas ejected from the opening 1371.

Because the reflection surface 1352 of the conical mirror 13521 has a shape corresponding to at least a part of the conical shape, the reflection surface 13521 includes a curved surface. Here, the curvature of each part of the reflection surface 13521 may vary depending on the position of each part on the reflection surface 13521. In this case, the shape of the spot of the processing light EL on the surface of the workpiece W may vary depending on the incident position of the processing light EL on the reflection surface 13521. When the shape of the spot of the processing light EL on the surface of the workpiece W is changed, there is a possibility that the fluence of the processing light EL on the surface of the workpiece W is changed. When the fluence of the processing light EL is changed, there is a possibility that a processing amount of the workpiece W is changed. Furthermore, when the shape of the spot of the processing light EL on the surface of the workpiece W is changed, there is a possibility that the shape of an irradiation area of the processing light EL on the surface of the workpiece W is changed. As a result, there is a possibility that the workpiece W is not properly processed. Therefore, in the first example embodiment, the shape change optical system 1341 may change the cross-sectional shape of the processing light EL (especially, the shape of a cross section that intersects with the propagating direction of the processing light EL) such that the shape of the spot of the processing light EL on the surface of the workpiece W is a desired shape, under the control of the control apparatus 3.

Specifically, the shape change optical system 1341 may change the cross-sectional shape of the processing light EL based on the incident position of the processing light EL on the reflection surface 13521. That is, the shape change optical system 1341 may change the cross-sectional shape of the processing light EL when the incident position of the processing light EL on the reflection surface 13521 is changed. For example, the shape change optical system 1341 may change the cross-sectional shape of the processing light EL such that the cross-sectional shape of the processing light EL propagating toward the first incident position ip1 on the reflection surface 13521 (see FIG. 4) is a first cross-sectional shape by which the shape of the spot of the processing light EL on the surface of the workpiece W can be a desired shape. For example, the shape change optical system 1341 may change the cross-sectional shape of the processing light EL such that the cross-sectional shape of the processing light EL propagating toward a third incident position ip3 on the reflection surface 13521 that is different from the first incident position ip1 (see FIG. 4) is a second cross-sectional shape that is different from the first cross-sectional shape and by which the shape of the spot of the processing light EL on the surface of the workpiece W can be a desired shape. The shape (curvature) of the reflection surface 13521 at the third incident position ip3 is assumed to be different from the shape (curvature) of the reflection surface 13521 at the first incident position ip1. Consequently, regardless of the shape of the reflection surface 13521, the shape of the spots of the processing light EL on the surface of the workpiece W is a desired shape. Therefore, the processing apparatus 1 is capable of properly processing the workpiece W. The shape change optical system 1341 may change the cross-sectional shape of the processing light EL based on the propagating direction of the processing light EL toward the fθ lens 1351 from the Galvano mirror 1342 (or, the angle of the X scanning mirror 1342X and the Y scanning mirror 1342Y of the Galvano mirror 1342). The shape change optical system 1341 may change the cross-sectional shape of the processing light EL based on the emitting position of the processing light EL from the fθ lens 1351.

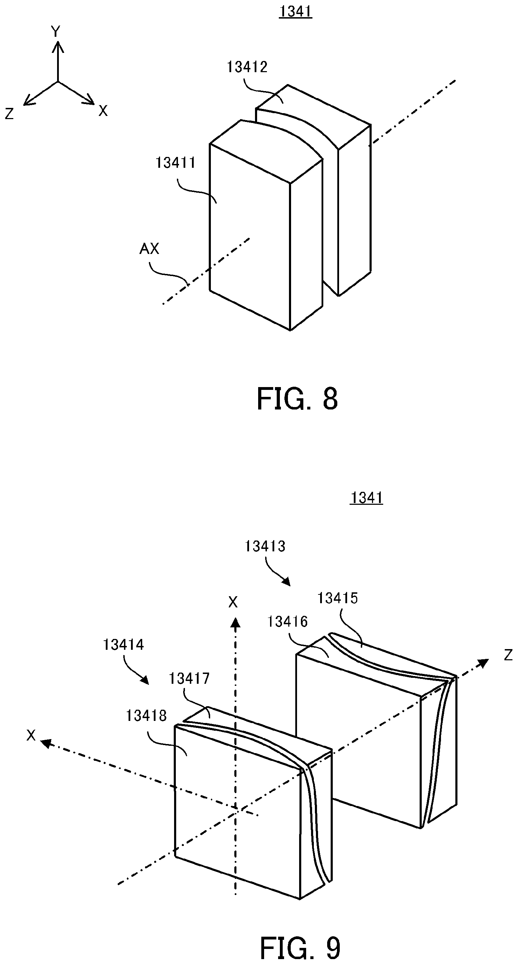

To change the cross-sectional shape of the processing light EL, the shape change optical system 1341 may include a shape change optical member having an optical surface of a predetermined shape (e.g., at least one of a refractive surface, a reflection surface and a diffractive surface). For example, the shape change optical system 1341 may include a shape change optical member having an optical surface of a shape that is complementary to that of the reflection surface 13521. When the reflection surface 13521 has a shape corresponding to at least a part of the conical shape as described above, an optical member having a cylindrical optical surface as illustrated in FIG. 8 (a so-called cylindrical lens) may be used as the shape change optical member. The shape change optical system 1341 illustrated in FIG. 8 includes a convex cylindrical lens 13411, and a concave cylindrical lens 13412 having a concave surface that is complementary to a convex surface of the convex cylindrical lens 13411. Each of the cylindrical lenses 13411 and 13412 is rotatable around the optical axis AX of the shape change optical system 1341. The interval of the cylindrical lenses 13411 and 13412 along the optical axis AX may be changeable. A not-illustrated drive mechanism that moves each of the cylindrical lenses 13411 and 13412 moves each of the cylindrical lenses 13411 and 13412 based on a control signal from the control apparatus 3. Since the control apparatus 3 also outputs a drive signal for driving the X scanning mirror 1342X and the Y scanning mirror 1342Y of the Galvano mirror 1342, it may be considered that each of the cylindrical lenses 13411 and 13412 changes the cross-sectional shape of the processing light EL emitted from the shape change optical system 1341, from the cross-sectional shape of the processing light EL entering the shape change optical system 1341, based on the angle of the X scanning mirror 1342X and the Y scanning mirror 1342Y of the Galvano mirror 1342, and furthermore, based on the propagating direction of the processing light EL toward the fθ lens 1351 from the Galvano mirror 1342, or based on the incident position of the processing light EL on the reflection surface 13521.

Furthermore, an optical member having a toric optical surface (a so-called toric lens) or the like may be used as the shape change optical member. Alternatively, an optical member having a conical optical surface may be used as the shape change optical member. In this case, when the processing light EL enters one part of the reflection surface 13521, the shape change optical system 1341 may move the shape change optical member along a direction intersecting with an optical axis of the shape change optical member such that the processing light EL passes through one part of the shape change optical member of a shape that is complementary to that of the one part of the reflection surface 13521. The shape change optical system 1341 may be an optical system that is configured by combining a plurality of shape change optical members as described above.

Furthermore, as illustrated in FIG. 9, an optical system including optical members having aspherical optical surfaces that are complementary to each other may be used as the shape change optical system 1341. In FIG. 9, the shape change optical system 1341 includes a first aspherical optical member pair 13413 having a first aspherical optical member 13415 and a second aspherical optical member 13416, and a second aspherical optical member pair 13414 having a third aspherical optical member 13417 and a fourth aspherical optical member 13418. Here, an optical surface of the first aspherical optical member 13415 on the second aspherical optical member 13416 side (-Z side) and an optical surface of the second aspherical optical unit 13416 on the first aspherical optical member 13415 side (+Z side) are aspherical refractive surfaces of complementary shapes to each other. Similarly, an optical surface of the third aspherical optical member 13417 on the fourth aspherical optical member 13418 side (-Z side) and an optical surface of the fourth aspherical optical unit 13418 on the third aspherical optical member 13417 side (+Z side) are aspherical refractive surface of complementary shapes to each other. Then, a relative positional relationship between the first aspherical optical member 13415 and the second aspherical optical member 13416 (e.g., a positional relationship along at least one of the X axis, the Y axis and Z axis) is changeable, and a relative positional relationship between the third aspherical optical member 13417 and the fourth aspherical optical member 13418 (e.g., a positional relationship along at least one of the X axis, the Y axis and Z axis) is also changeable. As in FIG. 8, the processing system SYS may change the cross-sectional shape of the processing light EL passing through the first aspherical optical member pair 13413 and the second aspherical optical member pair 13414, by moving at least one of the first aspherical optical member 13415 and the second aspherical optical member 13416, and/or at least one of the third aspherical optical member 13417 and the fourth aspherical optical member 13418, by using a not-illustrated drive mechanism.

As described above, the incident position of the processing light EL on the reflection surface 13521 varies depending on the propagating direction of the processing light EL toward the objective optical system 135 from the Galvano mirror 1342. Therefore, the shape change optical system 1341 may change the cross-sectional shape of the processing light EL based on the propagating direction of the processing light EL toward the objective optical system 135 from the Galvano mirror 1342. That is, the shape change optical system 1341 may change the cross-sectional shape of the processing light EL when the propagating direction of the processing light EL toward the objective optical system 135 from the Galvano mirror 1342 is changed. Alternatively, when the processing system SYSa includes a measurement apparatus that is configured to measure the shape of the spot of the processing light EL on the surface of the workpiece W, the shape change optical system 1341 may change the cross-sectional shape of the processing light EL based on a measurement result of the shape of the spot of the processing light EL.

Depending on the shape of the workpiece W, when the emitting direction of the processing light EL from the objective optical system 135 is changed, there is a possibility that a positional relationship between the condensed position of the processing light EL in the propagating direction of the processing light EL and the surface of the workpiece W changes. For example, when the cross-sectional shape of the space WSP along the XY plane (i.e., the cross-sectional shape of the inner wall surface Wsw) is rectangular and when the emitting direction of the processing light EL from the objective optical system 135 is changed, there is a possibility that the positional relationship between the condensed position of the processing light EL in the propagating direction of the processing light EL and the surface of the workpiece W changes. In this case, the condensed position adjustment optical system 1313 may adjust the condensed position of the processing light EL such that the positional relationship between the condensed position of the processing light EL and the surface of the workpiece W is maintained in a desired relationship. For example, the condensed position adjustment optical system 1313 may adjust the condensed position of the processing light EL such that the condensed position of the processing light EL is set on the surface of the workpiece W.

In FIG. 3 again, furthermore, the measurement light ML generated by the measurement light source 12 enters the processing head 13 through a light transmitting member such as an optical fiber. The measurement light source 12 may include a light comb light source. The light comb light source is a light source that is configured to generate, as the pulsed light, a light including frequency components that are arranged at equal intervals on a frequency axis (hereinafter referred to as a "light frequency comb"). In this case, the measurement light source 12 emits, as the measurement light ML, the pulsed light including the frequency components that are arranged at equal intervals on the frequency axis. The measurement light source 12, however, may include a light source that is different from the light comb light source.

In the example embodiment illustrated in FIG. 3, the processing system SYSa includes a plurality of measurement light sources 12. For example, the processing system SYSa may include a measurement light source 12#1 and a measurement light source 12#2. The plurality of measurement light sources 12 emit a plurality of measurement lights ML whose phases are synchronized with each other and which are coherent, respectively. For example, the plurality of measurement light sources 12 may have different oscillation frequencies. Thus, the plurality of measurement lights ML respectively emitted from the plurality of measurement light sources 12 are the plurality of measurement lights ML having different pulse frequencies (e.g., the number of pulsed lights per unit time, and an inverse number of an emission cycle of the pulsed light). As an example, the measurement light source 12#1 may emit a measurement light MI,#1 with a pulse frequency of 25GHz, and the measurement light source 12#2 may emit a measurement light ML#2 with a pulse frequency of 25GHz+α (e.g., +100kHz). The processing system SYSa, however, may include a single measurement light source 12.

The measurement light ML emitted from the measurement light source 12 enters the measurement optical system 132. The measurement optical system 132 is an optical system that emits, toward an emission optical system 113, the measurement light ML entering the measurement optical system 132. That is, the measurement optical system 132 is an optical system that guides the measurement light ML emitted from the measurement light source 12, to the combining optical system 133. The workpiece W is irradiated with the measurement light ML emitted from the measurement optical system 132 through the combining optical system 133, the state control optical system 134 and the objective optical system 135. That is, the measurement optical system 132 irradiates the workpiece W with the measurement light ML through the combining optical system 133, the state control optical system 134 and the objective optical system 135, in order to measure the workpiece W. Therefore, the measurement optical system 132 may be referred to as a measurement apparatus.

The measurement optical system 132 includes a mirror 1320, a beam splitter 1321, a beam splitter 1322, a detector 1323, a beam splitter 1324, a mirror 1325, a detector 1326, and a mirror 1327, for example.

The measurement light ML emitted from the measurement light source 12 enters the beam splitter 1321. Specifically, the measurement light ML emitted from the measurement light source 12#1 (hereinafter referred to as a "measurement light MI,#1") enters the beam splitter 1321. The measurement light ML emitted from the measurement light source 12#2 (hereinafter referred to as a "measurement light MI,#2") enters the beam splitter 1321 through the mirror 1320. The beam splitter 1321 emits, toward the beam splitter 1322, the measurement lights ML#1 and ML#2 entering the beam splitter 1321.

The beam splitter 1322 reflects, toward the detector 1323, a measurement light ML#1-1 that is a part of the measurement light ML#1 entering the beam splitter 1322. The beam splitter 1322 emits, toward the beam splitter 1324, a measurement light ML#1-2 that is another part of the measurement light ML#1 entering the beam splitter 1322. The beam splitter 1322 reflects, toward the detector 1323, a measurement light MI,#2-1 that is a part of the measurement light MI,#2 entering the beam splitter 1322. The beam splitter 1322 emits, toward the beam splitter 1324, a measurement light ML#2-2 that is another part of the measurement light MI,#2 entering the beam splitter 1322.

The measurement lights ML#1-1 and MI,#2-1 emitted from the beam splitter 1322 enter the detector 1323. The detector 1323 detects an interfering light generated by an interference between the measurement light ML#1-1 and the measurement light ML#2-1. Specifically, the detector 1323 detects the interfering light by optically receiving the interfering light. Thus, the detector 1323 may include a light reception element (a light reception part and typically a photoelectric conversion element) that is configured to optically receive a light. A detected result of the detector 1323 is outputted to the control apparatus 3.

The measurement lights MI,#1-2 and MI,#2-2 emitted from the beam splitter 1322 enter the beam splitter 1324. The beam splitter 1324 emits, toward the mirror 1325, at least a part of the measurement light ML#1-2 entering the beam splitter 1324. The beam splitter 1324 emits, toward the mirror 1327, at least a part of the measurement light ML#2-2 entering the beam splitter 1324.

The measurement light MI,#1-2 emitted from the beam splitter 1324 enters the mirror 1325. The measurement light ML#1-2 entering the mirror 1325 is reflected by a reflection surface of the mirror 1325 (wherein the reflection surface may be referred to as a reference surface). Specifically, the mirror 1325 reflects, toward the beam splitter 1324, the measurement light MI,#1-2 entering the mirror 1325. That is, the mirror 1325 emits the measurement light MI,#1-2 entering the mirror 1325, toward the beam splitter 1324 as a measurement light MI,#1-3 that is a reflection light thereof. The measurement light ML#1-3 emitted from the mirror 1325 enters the beam splitter 1324. The beam splitter 1324 emits, toward the beam splitter 1322, the measurement light MI,#1-3 entering the beam splitter 1324. The measurement light ML#1-3 emitted from the beam splitter 1324 enters the beam splitter 1322. The beam splitter 1322 emits, toward the detector 1326, the measurement light MI,#1-3 entering the beam splitter 1322.

On the other hand, the measurement light ML#2-2 emitted from the beam splitter 1324 enters the mirror 1327. The mirror 1327 reflects, toward the emission optical system 113, the measurement light MI,#2-2 entering the mirror 1327. That is, the mirror 1327 emits, toward the combining optical system 133, the measurement light ML#2-2 entering the mirror 1327.

The measurement light MI,#2-2 emitted from the mirror 1327 enters the combining optical system 133. The beam splitter 1331 of the combining optical system 133 emits, toward the state control optical system 134, the measurement light MI,#2-2 entering the beam splitter 1331. In the example illustrated in FIG. 3, the measurement light MI,#2-2 entering the state control optical system 134 is reflected by the polarization split surface to be emitted toward the state control optical system 134. Therefore, in the example illustrated in FIG. 3, the measurement light MI,#2-2 enters the polarization split surface of the beam splitter 1331 in a state where it has a polarized direction by which it is allowed to be reflected by the polarization split surface (e.g., a polarized direction by which it is an s-polarized light with respect to the polarization split surface).

Here, as described above, not only the measurement light MI,#2-2 but also the processing light EL enters the beam splitter 1331. That is, both the measurement light MI,#2-2 and the processing light EL pass through the beam splitter 1331. The beam splitter 1331 emits, in the same direction (i.e., toward the same state control optical system 134), the processing light EL and the measurement light MI,#2-2 that respectively enter the beam splitter 1331 from different directions. Therefore, the beam splitter 1331 substantially serves as a combining optical system that combines the processing light EL and the measurement light ML#2-2 (i.e., an optical path combining member that combines the optical path of the processing light EL and the optical path of the measurement light ML#2-2).

Incidentally, when the wavelength of the processing light EL is different from the wavelength of the measurement light ML, the combining optical system 133 may include a dichroic mirror as the combining optical system instead of the beam splitter 1331. Even in this case, the combining optical system 133 is capable of combining the processing light EL and the measurement light MI,#2-2 (i.e., to combine the optical path of the processing light EL and the optical path of the measurement light ML#2-2), by using the dichroic mirror.

The measurement light MI,#2-2 emitted from the beam splitter 1331 enters the shape change optical system 1341 of the state control optical system 134. The shape change optical system 1341 may change the shape of the measurement light ML#2-2 in a plane intersecting with the propagating direction of the measurement light MI,#2-2 (i.e., the cross-sectional shape of the measurement light ML#2-2), under the control of the control apparatus 3. Specifically, as in the case of changing the cross-sectional shape of the processing light EL, the shape change optical system 1341 may change the cross-sectional shape of the measurement light MI,#2-2 such that the shape of the spot of the measurement light ML#2-2 on the surface of the workpiece W is a desired shape. Since a modified aspect of the cross-sectional shape of the measurement light ML#2-2 may be the same as that of the cross-sectional shape of the processing light EL, a detailed description thereof will be omitted.

The measurement light MI,#2-2 emitted from the shape change optical system 1341 enters the Galvano mirror 1342. The Galvano mirror 1342 deflects the measurement light MI,#2-2, as in the case of deflecting the processing light EL. Therefore, the Galvano mirror 1342 may change each of an emitting angle of the measurement light MI,#2-2, a direction in which the measurement light MI,#2-2 is emitted from the Galvano mirror 1342, and a propagating direction of the measurement light MI,#2-2 toward the objective optical system 135 from the Galvano mirror 1342.

Here, as described above, not only the measurement light MI,#2-2 but also the processing light EL enters the Galvano mirror 1342. That is, the processing light EL and measurement light MI,#2-2 that are combined by the beam splitter 1331 enter the Galvano mirror 1342. Therefore, both the measurement light MI,#2-2 and the processing light EL pass through the same Galvano mirror 1342. Thus, the Galvano mirror 1342 may change the irradiation position of the processing light EL on the workpiece W and the irradiation position of the measurement light MI,#2-2 on the workpiece W in synchronization with each other. That is, the Galvano mirror 1342 may change the irradiation position of the processing light EL on the workpiece W and the irradiation position of the measurement light MI,#2-2 on the workpiece W in conjunction with each other.

The measurement light MI,#2-2 emitted from the Galvano mirror 1342 enters the objective optical system 135 (especially, the fθ lens 1351). The fθ lens 1351 irradiates the workpiece W with the measurement light MI,#2-2 from the Galvano mirror 1342 through the conical mirror 1352 (specifically, condenses the measurement light ML#2-2 on the workpiece W). Therefore, the objective optical system 135 (specifically, the conical mirror 1352) may emit (specifically, reflect) the measurement light MI,#2-2 entering at different incident positions on the reflection surface 13521, as in the case of emitting the processing light EL, respectively in different directions. Since an emission aspect of the measurement light MI,#2-2 from the objective optical system 135 may be the same as that of the processing light EL from the objective optical system 135, a detailed description thereof will be omitted.

When the workpiece W is irradiated with the measurement light MI,#2-2, a light caused by the irradiation of the measurement light ML#2-2 is generated from the workpiece W. That is, when the workpiece W is irradiated with the measurement light MI,#2-2, a light caused by the irradiation of the measurement light MI,#2-2 is emitted from the workpiece W. The light caused by the irradiation of the measurement light MI,#2-2 (in other words, the light emitted from the workpiece W due to the irradiation of the measurement light MI,#2-2) may include at least one of the measurement light MI,#2-2 reflected by the workpiece W (i.e., a reflection light), the measurement light MI,#2-2 scattered by the workpiece W (i.e., a scattering light), the measurement light MI,#2-2 diffracted by the workpiece W (i.e., a diffraction light), and the measurement light MI,#2-2 transmitted through the workpiece W (i.e., a transmitted light).

At least a part of the light emitted from the workpiece W due to the irradiation of the measurement light MI,#2-2 (hereinafter, this light is referred to as a "measurement light ML#2-3") enters the objective optical system 135. The measurement light MI,#2-3 may include the reflection light of the measurement light MI,#2-2 on the workpiece W. The measurement light ML#2-3 may include the scattering light of the measurement light MI,#2-2 on the workpiece W. The measurement light ML#2-3 entering the objective optical system 135 enters the state control optical system 134 through the conical mirror 1352 and the fθ lens 1351. The measurement light MI,#2-3 entering the state control optical system 134 enters the combining optical system 133 through the Galvano mirror 1342 and the shape change optical system 1341. The beam splitter 1331 of the combining optical system 133 emits, toward the measurement optical system 132, the measurement light MI,#2-3 entering the beam splitter 1331. In the example illustrated in FIG. 3, the measurement light MI,#2-3 entering the beam splitter 1331 is reflected in the polarization split surface to be emitted toward the measurement optical system 132. Thus, in the example illustrated in FIG. 3, the measurement light MI,#2-3 enters the polarization split surface of the beam splitter 1331 in a state where it has a polarized direction by which it is allowed to be reflected by the polarization split surface.

The measurement light MI,#2-3 emitted from the beam splitter 1331 enters the mirror 1327 of the measurement optical system 132. The mirror 1327 reflects, toward the beam splitter 1324, the measurement light MI,#2-3 entering the mirror 1327. The beam splitter 1324 emits, toward the beam splitter 1322, at least a part of the measurement light MI,#2-3 entering the beam splitter 1324. The beam splitter 1322 emits, toward the detector 1326, at least a part of the measurement light MI,#2-3 entering the beam splitter 1322.

As described above, in addition to the measurement light MI,#2-3, the measurement light MI,#1-3 enters the detector 1326. That is, the measurement light MI,#2-3 propagating toward the detector 1326 through the workpiece W and the measurement light ML#1-3 propagating toward the detector 1326 without passing through the workpiece W enter the detector 1326. The measurement light MI,#1-3 may be referred to as a reference light. The detector 1326 detects an interfering light generated by an interference between the measurement light MI,#1-3 and the measurement light MI,#2-3. Specifically, the detector 1326 detects the interfering light by optically receiving the interfering light. Therefore, the detector 1326 may include a light reception element (a light reception part) that is configured to optically receive a light. A detected result of the detector 1326 is outputted to the control apparatus 3.

The control apparatus 3 calculates the state of the workpiece W based on the detected result of the detector 1323 and the detected result of the detector 1326. Specifically, since the pulse frequency of the measurement light ML#1 is different from the pulse frequency of the measurement light ML#2, the pulse frequency of the measurement light ML#1-1 is different from the pulse frequency of the measurement light MI,#2-1. Therefore, the interfering light between the measurement light ML#1-1 and the measurement light MI,#2-1 is an interfering light in which a pulsed light appears in synchronization with a timing at which the pulsed light of the measurement light ML#1-1 and the pulsed light of the measurement light MI,#2-1 enter the detector 1323 at the same time. Similarly, the pulse frequency of the measurement light MI,#1-3 is different from the pulse frequency of the measurement light MI,#2-3. Therefore, the interfering light between the measurement light ML#1-3 and the measurement light MI,#2-3 is an interfering light in which a pulsed light appears in synchronization with a timing at which the pulsed light of the measurement light ML#1-3 and the pulsed light of the measurement light MI,#2-3 enter the detector 1326 at the same time. Here, a position (a position on a time axis) of the pulsed light of the interfering light detected by the detector 1326 varies depending on the positional relationship between the processing head 13 and the workpiece W. This is because the interfering light detected by the detector 1326 is the interfering light generated by the interference between the measurement light MI,#2-3 propagating toward the detector 1326 through the workpiece W and the measurement light ML#1-3 propagating toward the detector 1326 without passing through the workpiece W. On the other hand, a position (a position on the time axis) of the pulsed light detected by the detector 1323 does not vary depending on the positional relationship between the processing head 13 and the workpiece W. Therefore, it can be said that a difference in time between the pulsed light of the interfering light detected by the detector 1323 and the pulsed light of the interfering light detected by the detector 1326 indirectly indicates the positional relationship between the processing head 13 and the workpiece W (typically, a distance between the processing head 13 and the workpiece W). Thus, the control apparatus 3 is capable of calculating the state of the workpiece W based on the difference in time between the pulsed light of the interfering light detected by the detector 1323 and the pulsed light of the interfering light detected by the detector 1326. Specifically, the control apparatus 3 is capable of calculating the position of a part of the workpiece W that is irradiated with the measurement light MI,#2-2 based on the difference in time between the pulsed light of the interfering light detected by the detector 1323 and the pulsed light of the interfering light detected by the detector 1326. That is, the control apparatus 3 is capable of obtaining information about the position of the part of the workpiece W that is irradiated with the measurement light MI,#2-2. Furthermore, when a plurality of parts of the workpiece W are irradiated with the measurement light MI,#2-2 and/or when the workpiece W is irradiated with the measurement light MI,#2-2 such that the surface of the workpiece W is swept by the measurement light MI,#2-2, the control apparatus 3 is capable of calculating the shape of the workpiece W.

The calculated state of the workpiece W may be used to control the processing system SYSa. Specifically, the calculated state of the workpiece W may be used to control the processing apparatus 1. The calculated state of the workpiece W may be used to control the processing head 13. The calculated state of the workpiece W may be used to control the head driving system 14. The calculated state of the workpiece W may be used to control the stage apparatus 2. The calculated state of the workpiece W may be used to control the stage driving system 23.

The control apparatus 3 may control the processing system SYSa based on the detected result of the detector 1323 and the detected result of the detector 1326, without calculating the state of the workpiece W. For example, the control apparatus 3 may control the processing apparatus 1 based on the detected result of the detector 1323 and the detected result of the detector 1326. The control apparatus 3 may control the processing head 13 based on the detected result of the detector 1323 and the detected result of the detector 1326. The control apparatus 3 may control the head driving system 14 based on the detected result of the detector 1323 and the detected result of the detector 1326. The control apparatus 3 may control the stage apparatus 2 based on the detected result of the detector 1323 and the detected result of the detector 1326. The control apparatus 3 may control the stage driving system 23 based on the detected result of the detector 1323 and the detected result of the detector 1326.

### (1-3) Operation of Processing System SYSa

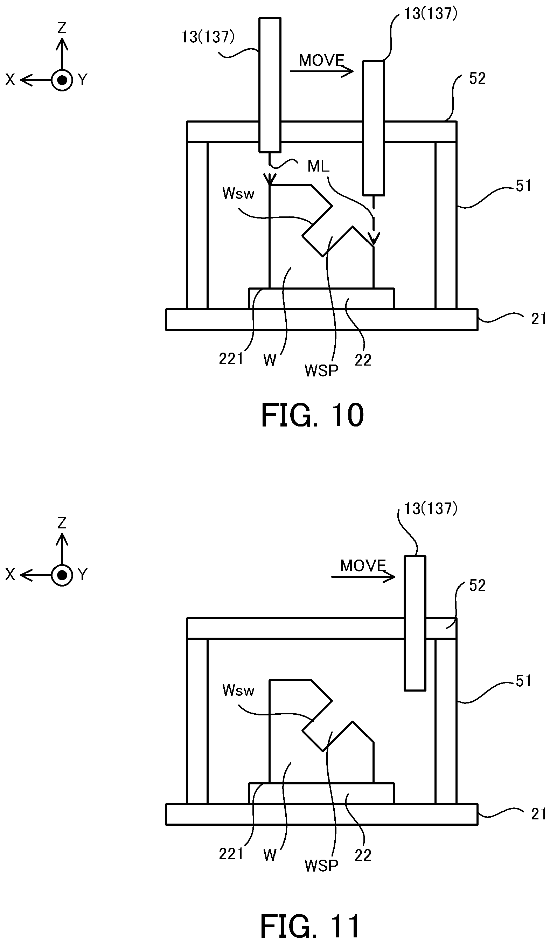

Next, the operation of the processing system SYSa will be described. The processing system SYSa performs a processing operation for processing at least a part of the surface of the workpiece W by using the processing light EL. Thus, in the following, the processing operation will be described with reference to FIG. 10 to FIG. 13. Each of FIG. 10 to FIG. 13 is a cross-sectional view that schematically illustrates the processing system SYSa that performs the processing operation. Incidentally, FIG. 10 to FIG. 13 selectively describe only a part of configuration requirements of the processing system SYSa for simplification of the drawings. Furthermore, in the following, a description will be given to the processing operation performed in processing the inner wall surface Wsw of the workpiece W in which the cylindrical space WSP illustrated in FIG. 1 is formed.

To perform the processing operation, the processing system SYSa measures the workpiece W by using the measurement light ML. Specifically, as illustrated in FIG. 10, the processing system SYSa repeats an operation of measuring the workpiece W by irradiating the surface of the workpiece W with the measurement light ML, while changing the relative positional relationship between the processing head 13 and the workpiece W. As a result, the control apparatus 3 is capable of determining the shape and position of the workpiece W based on a measurement result of the workpiece W using the measurement light ML. Furthermore, the control apparatus 3 is capable of determining the position of a processing target part of the workpiece W to be processed by using the processing light EL (in the example illustrated in FIG. 10, a part where the space WSP is formed).

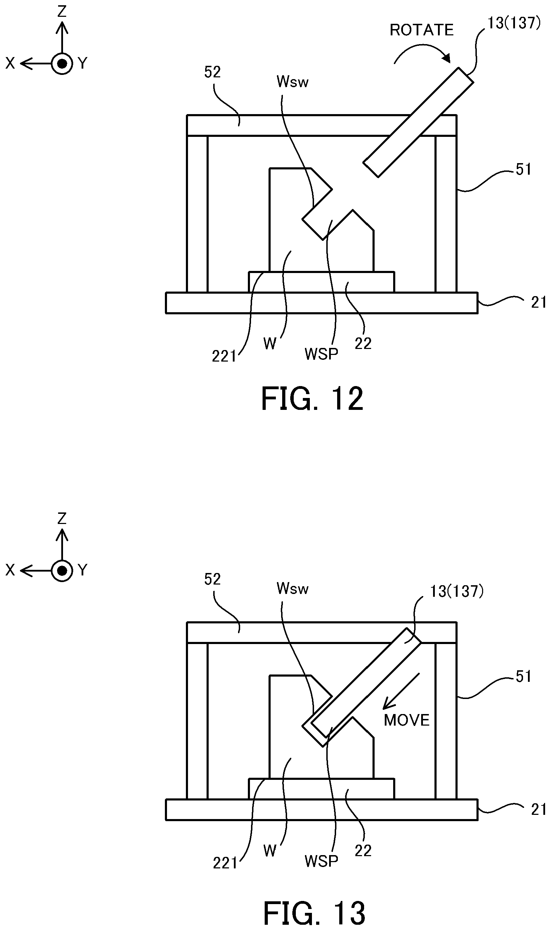

Then, the control apparatus 3 changes the relative positional relationship between the process head 13 and the workpiece W such that the processing head 13 is located at a position at which the processing target part of the workpiece W can be processed. Specifically, the control apparatus 3 changes the relative positional relationship between the processing head 13 and the workpiece W such that the processing head 13 is located at a position at which the head housing 137 can be inserted into the space WSP. For example, in the example illustrated in FIG. 10, an extending direction of the space WSP is inclined to each of the Z axis and the support surface 221 of the stage 22 that is a plane along the XY plane. That is, in the example illustrated in FIG. 10, the inner wall surface Wsw is inclined to each of the support surface 221 and the Z axis. Therefore, in order to insert the head housing 137 into the space WSP, the head housing 137 needs to be inclined to each of the support surface 221 and the Z axis. Therefore, the control apparatus 3 changes the relative positional relationship between the processing head 13 and the workpiece W such that the head housing 137 is inclined to each of the support surface 221 and the Z axis. Since the head housing 137 contains the objective optical system 135, the control apparatus 3 may change the relative positional relationship between the processing head 13 and the workpiece W such that at least a part of the objective optical system 135 (i.e., at least a part of the fθ lens 1351 and the conical mirror 1352) is inclined to each of the support surface 221 and the Z axis. For example, as illustrated in FIG. 11, the control apparatus 3 may move the processing head 13 along the X axis direction by controlling the head driving system 14, and then, as illustrated in FIG. 12, the control apparatus 3 may rotate the Z slider member 143 around the Y axis (i.e., may rotate the processing head 13 around the Y axis) such that the head housing 137 is inclined to each of the support surface 221 and the Z axis. Typically, the control apparatus 3 may rotate the processing head 13 around the Y axis such that an extending direction of the head housing 137 is aligned to the extending direction of the space WSP. Therefore, the control apparatus 3 may calculate an inclination angle of the extending direction of the space WSP (i.e., an inclination angle of the inner wall surface Wsw) based on the measurement result of the workpiece W using the measurement light ML, and may rotate the processing head 13 around the Y axis based on the calculated inclination angle. In this case, it may be considered that the head driving system 14 serves as an inclination apparatus that inclines the head housing 137 to the support surface 221 and the Z axis.

Then, as illustrated in FIG. 13, the control apparatus 3 changes the relative positional relationship between the processing head 13 and the workpiece W such that the processing head 13 is inserted into the space WSP. Specifically, the control apparatus 3 may control the head driving system 14 such that the processing head 13 moves along the Z slider member 143. Since an extending direction of the Z slider member 143 is aligned to the extending direction of the space WSP, the control apparatus 3 may control the head driving system 14 such that the processing head 13 moves along the extending direction of the space WSP (i.e., along the inner wall surface Wsw). Consequently, the processing head 13 is inserted into the space WSP.

After the processing head 13 is inserted into the space WSP, the processing system SYSa measures the inner wall surface Wsw that is a processing target by using the measurement light ML. Then, the processing system SYSa processes the inner wall surface Wsw by irradiating the inner wall surface Wsw with the processing light EL based on a measurement result of the inner wall surface Wsw. At this time, the processing system SYSa may process the inner wall surface Wsw by alternately repeating an operation of measuring a part of the inner wall surface Wsw and an operation of processing the measured part of the inner wall surface Wsw. Alternatively, the processing system SYSa may measure the inner wall surface Wsw in a period in which the processing head 13 moves such that the processing head 13 is inserted into the space WSP, and may process the inner wall surface Wsw in a period in which the processing head 13 moves such that the processing head 13 is removed from the space WSP.

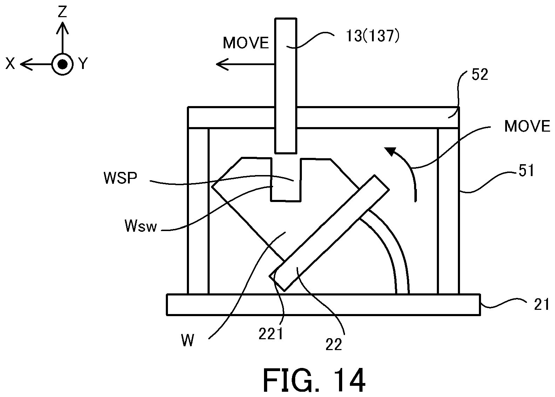

In the above description, the control apparatus 3 moves the processing head 13 so as to incline the head housing 137 (especially at least a part of the objective optical system 135 contained in the head housing 137) to the support surface 221. However, when the stage 22 is movable along at least one of the θX direction and the θY direction, the control apparatus 3 may move the stage 22 so as to incline the head housing 137 to the support surface 221 (i.e., so as to incline the support surface 221 to the head housing 137). That is, when the posture of the stage 22 is changeable, the control apparatus 3 may change the posture of the stage 22 so as to incline the head housing 137 to the support surface 221 (i.e., so as to incline the support surface 221 to the head housing 137). FIG. 14 illustrates an example of the stage 22 whose posture is changed to incline the support surface 221 to the head housing 137. As illustrated in FIG. 14, the control apparatus 3 may move the processing head 13 along the X axis direction by controlling the head driving system 14, and then, the control apparatus 3 may rotate the stage 22 around the Y axis such that the support surface 221 is inclined to the head housing 137, by controlling the stage driving system 23. Typically, the control apparatus 3 may rotate the stage 22 around the Y axis such that the extending direction of the head housing 137 is aligned to the extending direction of the space WSP. Therefore, the control apparatus 3 may calculate the inclination angle of the extending direction of the space WSP (i.e., the inclination angle of the inner wall surface Wsw) based on the measurement result of the workpiece W using the measurement light ML, and may rotate the stage 22 around the Y axis based on the calculated inclination angle. In this case, it may be considered that the stage driving system 23 that moves the stage 22 serves as an inclination apparatus that inclines the support surface 221 to the head housing 137.

### (1-4) Technical Effect of Processing System SYSa

The processing system SYSa described above is capable of properly processing the workpiece W by using the processing light EL. Furthermore, the processing system SYSa is capable of properly measuring the workpiece W by using the measurement light ML.

In particular, the processing system SYSa is capable of measuring and processing the workpiece W of a complex shape. Specifically, the processing system SYSa is capable of measuring and processing the workpiece W in which the space WSP recessed to be surrounded by at least a part of the surface of the workpiece W is formed, for example. The processing system SYSa is capable of measuring and processing the workpiece W having a surface that is concave with respect to the processing head 13 (e.g., the inner wall surface Wsw that faces the space WSP described above), for example.

Furthermore, the processing system SYSa may not include a movable member such as the Galvano mirror 1342, near an end or tip of the processing head 13. For example, the processing system SYSa may not include a movable member such as the Galvano mirror 1342, in the head housing 137 that is inserted into the space WSP formed in the workpiece W. When the movable member such as the Galvano mirror 1342 is disposed near the end of the processing head 13 (e.g., in the head housing 137), mechanical properties of the movable member may be limited. As a result, the motion or operation of the movable member may be limited. This is because the end of the processing head 13 is inserted into the space WSP that is likely to be relatively narrow, resulting in design constraints on the movable member. Consequently, due to the limitation on the motion or operation of the movable member is limited, at least one of the processing accuracy and processing speed of the workpiece W (i.e., throughput for processing the workpiece W) may be reduced. In the first example embodiment, however, since the movable member such as the Galvano mirror 1342 may not be provided near the end of the processing head 13, the possibility of the limited motion or operation of the movable member is relatively low. Therefore, there is also a relatively low possibility that at least one of the processing accuracy and processing speed of the workpiece W is reduced. Consequently, the processing system SYSa is capable of processing the workpiece W, relatively quickly and highly accurately.

Furthermore, even when the movable member is not contained in the head housing 137, the objective optical system 135 contained in the head housing 137 (specifically, the conical mirror 1352) may change the emitting direction of the processing light EL around the optical axis AX of the fθ lens 1351. Therefore, even when the movable member is not contained in the head housing 137, the processing system SYSa is capable of properly processing the surface of the workpiece W that surrounds the head housing 137 (e.g., the inner wall surface Wsw).

### (2) Processing System SYSb in Second Example Embodiment

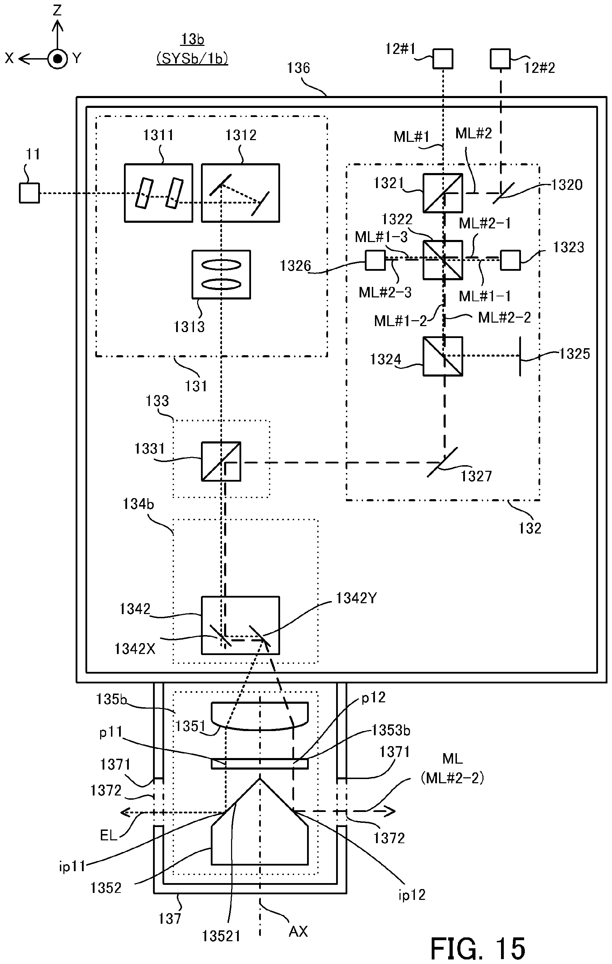

Next, the processing system SYS in a second example embodiment (in the below described description, the processing system SYS in the second example embodiment is referred to as a "processing system SYSb") will be described. The processing system SYSb in the second example embodiment is different from the processing system SYSa in the first example embodiment described above in that it includes a processing apparatus 1b instead of the processing apparatus 1. Other features of the processing system SYSb may be the same as those of the processing system SYSa. The processing apparatus 1b is different from the processing apparatus 1 described above in that it includes a processing head 13b instead of the processing head 13. Other features of the processing apparatus 1b may be the same as those of the processing apparatus 1. Therefore, in the following, the processing head 13b in the second example embodiment will be described with reference to FIG. 15. FIG. 15 is a cross-sectional view that illustrates a configuration of the processing head 13b in the second example embodiment.

As illustrated in FIG. 15, the processing head 13b is different from the processing head 13 in that it includes a state control optical system 134b and an objective optical system 135b instead of the state control optical system 134 and the objective optical system 135. Other features of the processing head 13b may be the same as those of the processing head 13.

The state control optical system 134b is different from the state control optical system 134 in that it may not include the shape change optical system 1341. Therefore, in the second example embodiment, each of the measurement light MI,#2-2 and the processing light EL from the combining optical system 133 enters the Galvano mirror 1342. Other features of the state control optical system 134b may be the same as those of the state control optical system 134. The state control optical system 134b, however, may include the shape change optical system 1341.

The objective optical system 135b is different from the objective optical system 135 in that it includes a shape change optical system 1353b. Other features of the objective optical system 135b may be the same as those of the objective optical system 135.

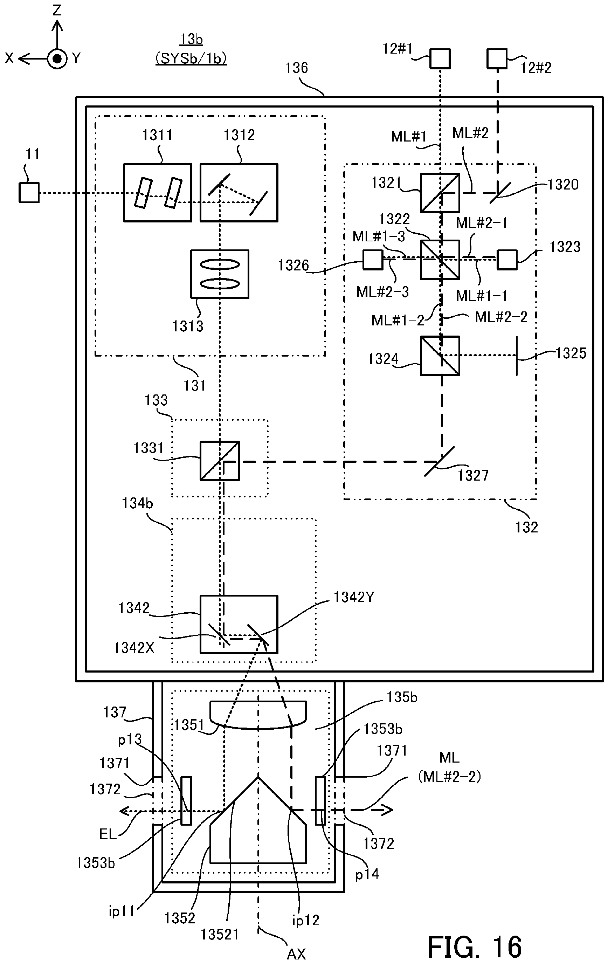

The shape change optical system 1353b is disposed on the respective optical paths of the processing light EL and the measurement light ML in the objective optical system 135b. In the example illustrated in FIG. 15, the shape change optical system 1353b is disposed on the respective optical paths of the processing light EL and the measurement light ML between the fθ lens 1351 and the conical mirror 1352. However, as illustrated in FIG. 16 that is a cross-sectional view illustrating another example of the processing head 13b in the second example embodiment, the shape change optical system 1353b may be disposed on the respective optical paths of the processing light EL and the measurement light ML emitted from the conical mirror 1352. That is, the shape change optical system 1353b may be disposed on the respective optical paths of the processing light EL and the measurement light ML at a position that is away toward the workpiece W from the reflection surface 13521 of the conical mirror 1352. In the example illustrated in FIG. 16, since the emitting directions of the processing light EL and the measurement light ML are changed around the optical axis AX, the shape change optical system 1353b may have a shape that allows it to surround the optical axis AX (e.g., a loop-like shape). Alternatively, although it is not illustrated for the simplicity of explanation, the shape change optical system 1353b is disposed on the respective optical paths of the measurement light ML and the processing light EL entering the fθ lens 1351. That is, the shape change optical system 1353b may be disposed on the respective optical paths of the processing light EL and the measurement light ML at a position that is away toward the state control optical system 134 from the fθ lens 1351.

The shape change optical system 1353b is an optical member that is configured to change the respective cross-sectional shapes of the processing light EL and the measurement light ML. The shape change optical system 1353b may be referred to as a beam shape change apparatus. Specifically, the shape change optical system 1353b may change the cross-sectional shape of the processing light EL such that the shape of the spot of the processing light EL on the surface of the workpiece W is a desired shape. That is, the shape change optical system 1353b may change the cross-sectional shape of the processing light EL such that the shape of the spot of the processing light EL, that may vary depending on the incident position of the processing light EL on the reflection surface 13521 is a desired shape regardless of the incident position of the processing light EL on the reflection surface 13521.

The shape change optical system 1353b is the same as the shape change optical system 1341 in the first example embodiment described above in that it may change the cross-sectional shape of the processing light EL. However, the shape change optical system 1353b may be different from the shape change optical system 1341 in the first example embodiment including the movable member, in that it may not include the movable member (i.e., a movable optical member).

When the shape change optical system 1353b may not include the movable member, the shape change optical system 1353b may have such a property that one part of the shape change optical system 1353b through which the processing light EL entering at one incident position on the reflection surface 13521 passes, may change the cross-sectional shape of the processing light EL that passes through the one part, such that the shape of the spot formed on the surface of the workpiece W by the processing light EL that passes through the one part is a desired shape. For example, as illustrated in FIG.15, the shape change optical system 1353b may have the following properties: (i) a first part p11 of the shape change optical system 1353b through which the processing light EL entering at the first incident position ip11 on the reflection surface 13521 passes, may change the cross-sectional shape of the processing light EL that passes through the first part p11 to the first cross-sectional shape, such that the spot formed on the surface of the workpiece W by the processing light EL that passes through the first part p11 has a desired shape; and (ii) a second part p12 of the shape change optical system 1353b through which the processing light EL entering at the second incident position ip12 on the reflection surface 13521 passes, may change the cross-sectional shape of the processing light EL that passes through the second part p12 to the second cross-sectional shape, such that the spot formed on the surface of the workpiece W by the processing light EL that passes through the second part p12 has a desired shape. That is, the shape change optical system 1353b may have such a property that it may anisotropically change the cross-sectional shape of the processing light EL when the incident position on the reflection surface 13521 of the processing light EL entering the reflection surface 13521 is changed. The same applies to the cross-sectional shape of the measurement light ML.

Alternatively, as illustrated in FIG. 16, when the shape change optical system 1353b is disposed on the respective optical paths of the processing light EL and the measurement light ML emitted from the conical mirror 1352, the shape change optical system 1353b may have such a property that one part of the shape change optical system 1353b through which the processing light EL reflected at one incident position on the reflection surface 13521 passes, may change the cross-sectional shape of the processing light EL that passes through the one part, such that the spot formed on the surface of the workpiece W by the processing light EL that passes through the one part has a desired shape. For example, as illustrated in FIG. 16, the shape change optical system 1353b may have the following properties: (i) a first part p13 of the shape change optical system 1353b through which the processing light EL reflected at the first incident position ip11 on the reflection surface 13521 passes, may change the cross-sectional shape of the processing light EL that passes the first part p13 to a third cross-sectional shape, such that the spot formed on the surface of the workpiece W by the processing light EL that passes through the first part p13 has a desired shape; and (ii) a second part p14 of the shape change optical system 1353b through which the processing light EL reflected at the second incident position ip12 on the reflection surface 13521 passes, may change the cross-sectional shape of the processing light EL that passes the second part p14 to a fourth cross-sectional shape, such that the spot formed on the surface of the workpiece W by the processing light EL that passes through the second part p14 has a desired shape. That is, the shape change optical system 1353b may have such a property that it may anisotropically change the cross-sectional shape of the processing light EL when a reflection position on the reflection surface 13521 of the processing light EL reflected by the reflection surface 13521 is changed. The same applies to the cross-sectional shape of the measurement light ML.

To change the respective cross-sectional shapes of the processing light EL and the measurement light ML, the shape change optical system 1353b may include a shape change optical member having an optical surface of a predetermined shape (typically a refractive surface). For example, the shape change optical system 1353b may include a first shape change optical member having an optical surface of a shape that is complementary to that of the reflection surface 13521. When the reflection surface 13521 has a shape corresponding to at least a part of the conical shape as described above, an optical member having a cylindrical optical surface (a so-called cylindrical lens), an optical member having a toric optical surface (a so-called toric lens) and an optical member having a troidal optical surface (a so-called toroidal lens) or the like may be used as the first shape change optical member as described above. Alternatively, an optical member having a conical optical surface may be used as the first shape change optical member. Alternatively, for example, the shape change optical system 1353b may include a second shape change optical member having an aspherical optical surface (e.g., an aspherical lens). Alternatively, for example, the shape change optical system 1353b may include a third shape change optical member corresponding to a diffractive optical element (DOE). The shape change optical system 1353b may be an optical member that is configured by combining a plurality of sets of at least one of the first to third shape change optical members.

The processing system SYSb in the second example embodiment described above is capable of achieving the same effect as an effect that is achievable by the processing system SYSa in the first example embodiment described above. In the second example embodiment, the processing system SYSb may not control the shape change optical system 1353b to change the respective cross-sectional shapes of the processing light EL and the measurement light ML. That is, when each of the processing light EL and the measurement light ML passes through the shape change optical system 1353b, each of the cross-sectional shapes of the processing light EL and the measurement light ML is changed to an appropriate shape. Therefore, since a processing load required to change the respective cross-sectional shapes of the processing light EL and the measurement light ML is eliminated, the processing load of the processing system SYSb is reduced.

### (3) Processing System SYSc in Third Example Embodiment

Next, the processing system SYS in a third example embodiment (in the below described description, the processing system SYS in the third example embodiment is referred to as a "processing system SYSc") will be described. The processing system SYSc in the third example embodiment is different from the processing system SYSa in the first example embodiment described above in that the objective optical system 135 includes a pyramid mirror 1352c instead of the conical mirror 1352. Other features of the processing system SYSc may be the same as those of the processing system SYSa.

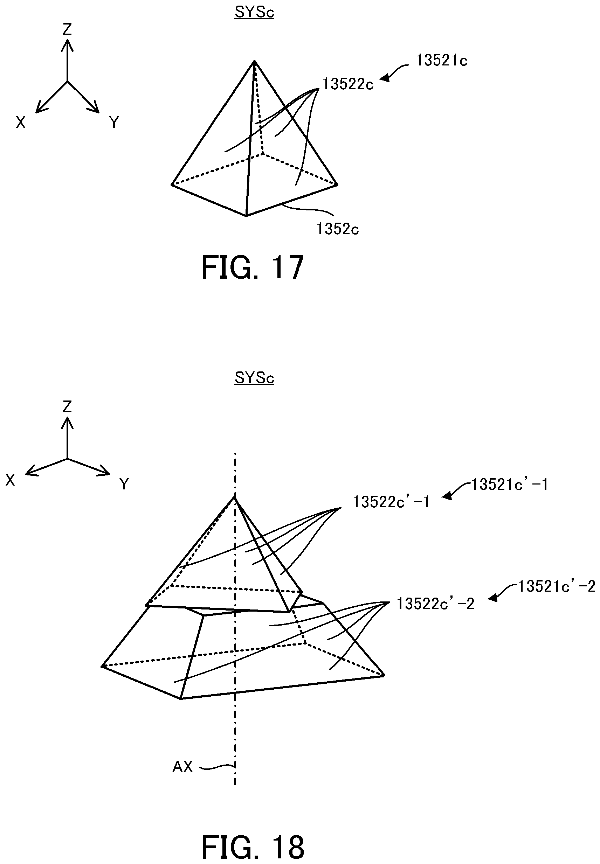

The pyramid mirror 1352c is different from the conical mirror 1352 described above including the convex reflection surface 13521 corresponding to at least a part of the conical shape, in that it includes a convex reflection surface 13521c corresponding to at least a part of a pyramid shape. The reflection surface having a shape corresponding to at least a part of the pyramid shape may be referred to as a pyramidal reflection surface. FIG. 17 illustrates an example of the pyramid mirror 1352. FIG. 17 illustrates the pyramid mirror 1352c including the reflection surface 13521c having a shape corresponding to at least a part of a quadrangular pyramid shape. That is, FIG. 17 illustrates the pyramid mirror 1352c provided with the reflection surface 13521c including four reflection surfaces 13522c, each having a shape corresponding to at least a part of four side surfaces of a square pyramid. The pyramid mirror 1352c, however, may be provided with the reflection surface 13521c including N reflection surfaces 13522c, each having a shape corresponding to at least a part of N side surfaces of an N-polygonal pyramid (wherein N is an integer of 3 or more). Other features of the pyramid mirror 1352c may be the same as those of the conical mirror 1352. Therefore, in the third example embodiment, the fθ lens 1351 irradiates the workpiece W with the processing light EL through the pyramid mirror 1352c. Specifically, the pyramid mirror 1352c emits (specifically, reflects) the processing light EL entering at different incident positions on the reflection surface 13521c, respectively in different directions.

The processing system SYSc in the third example embodiment described above is capable of achieving the same effect as an effect that is achievable by the processing system SYSa in the first example embodiment described above.

The processing system SYSc may include a pyramid mirror 1352c' illustrated in FIG. 18 instead of the pyramid mirror 1352c illustrated in FIG. 17. As illustrated in FIG. 18, the pyramid mirror 1352c' includes a first reflection surface 13521c' (hereinafter referred to as a first reflection surface 13521c'-1), and a second reflection surface 13521c' (hereinafter referred to as a second reflection surface 13521c'-2) disposed at a position that is opposite to the first reflection surface 13521c'-1 relative to the fθ lens 1351 of in a direction along the optical axis AX of the fθ lens 1351. The first reflection surface 13521c'-1 includes N1 reflection surfaces 13522c'-1, each having a shape corresponding to at least a part of N1 side surfaces of an N1-polygonal pyramid (wherein N1 is an integral number of 3 or more). The second reflection surface 13521c'-2 includes N2 reflection surfaces 13522c'-2, each having a shape corresponding to at least a part of N2 side surfaces of an N2-polygonal pyramid (wherein N2 is an integral number of 3 or more). The N2 reflection surfaces 13522c'-2 face in different directions from the N1 reflection surfaces 13522c'-1. When such a pyramid mirror 1352c' is used, as compared with when the pyramid mirror 1352c is used, there are more emitting directions of the processing light EL from the pyramid mirror 1352c'. For example, when N1=N2=4, the pyramid mirror 1352c emits the processing light EL in four emitting directions respectively from the four reflection surfaces 13522c, while the pyramid mirror 1352c' emits the processing light EL in eight emitting directions from the four reflection surfaces 13522c'-1 and the four reflection surfaces 13522c'-2. Therefore, it is possible to process the workpiece W of a more complex shape. In FIG. 17, the pyramid mirror 1352c' includes two reflection surfaces 13521c', but the pyramid mirror 1352c' may include three or more reflection surfaces 13521c' that are located at different positions in a direction along the optical axis AX.

Furthermore, the pyramid mirror 1352c (or the pyramid mirror 1352c', wherein the same shall apply hereinafter) is used, the pyramid mirror 1352c (or the head housing 137 in which the pyramid mirror 1352c is contained) may be rotatable around the optical axis AX. When the pyramid mirror 1352c is rotated around the optical axis AX, the emitting direction of the processing light EL from the pyramid mirror 1352c is changed to be around the optical axis AX. Consequently, the pyramid mirror 1352c is capable of emitting the processing light EL toward the emitting direction of 360 degrees that surrounds the optical axis AX. The pyramid mirror 1352c (or, the head housing 137) may be rotatable around the optical axis AX, for example, by the same apparatus as a housing driving system 138f described in a sixth example embodiment described later.

Furthermore, the processing system SYSc may include any reflection optical system that may reflect the processing light EL emitted from the fθ lens 1351 in the direction intersecting with the optical axis AX of the fθ lens 1351 (e.g., a reflection optical system including a convex reflection surface), instead of the pyramid mirror 1352c. The conical mirror 1352 and the pyramid mirror 1352c described above correspond to a specific example of such a reflection optical system. Furthermore, an example of the reflection optical system including the convex reflection surface includes a reflection optical system including a convex reflection surface of a hyperboloid shape.

Furthermore, the processing system SYSb in the second example embodiment described above may include the configuration requirements that are specific to the processing system SYSc in the third example embodiment. The configuration requirements that are specific to the processing system SYSc in the third example embodiment include those related to at least one of the pyramid mirror 1352c and the pyramid mirror 1352c'.

### (4) Processing System SYSd in Fourth Example Embodiment

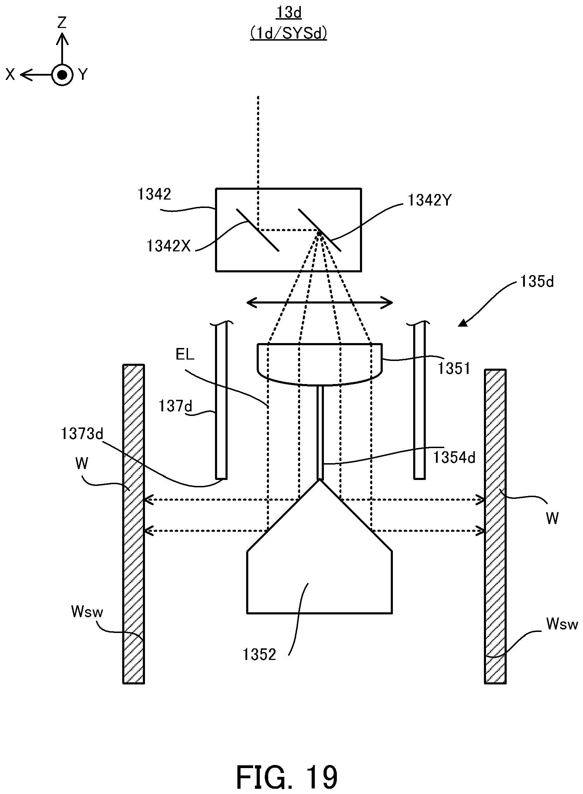

Next, the processing system SYS in a fourth example embodiment (in the below described description, the processing system SYS in the fourth example embodiment is referred to as a "processing system SYSd") will be described. The processing system SYSd in the fourth example embodiment is different from the processing system SYSa in the first example embodiment described above in that it includes a processing apparatus 1d instead of the processing apparatus 1. Other features of the processing system SYSd may be the same as those of the processing system SYSa. The processing apparatus 1d is different from the processing apparatus 1 described above in that it includes a processing head 13d instead of the processing head 13. Other features of the processing apparatus 1d may be the same as those of the processing apparatus 1. The processing head 13d is different from the processing head 13 described above in that it includes an objective optical system 135d instead of the objective optical system 135. Other features of the processing head 13d may be the same as those of the processing head 13. Therefore, in the following, the objective optical system 135d in the fourth example embodiment will be described with reference to FIG. 19. FIG. 19 is a cross-sectional view that illustrates a configuration of the objective optical system 135d in the fourth example embodiment.

As illustrated in FIG. 19, the objective optical system 135d is different from the objective optical system 135 in that the conical mirror 1352 is supported by the fθ lens 1351. Other features of the objective optical system 135d may be the same as those of the objective optical system 135.

In the example illustrated in FIG. 19, the conical mirror 1352 is suspended from the fθ lens 1351 through a support member 1354d. The support member 1354d may be disposed on the optical axis AX of the fθ lens 1351. When the conical mirror 1352 is supported by the fθ lens 1351, the conical mirror 1352 may not be supported by the head housing 137. Therefore, a degree of freedom in the shape of the head housing 137 is improved. That is, the processing head 13d may include a head housing 137d of a shape that is different from that of the head housing 137 described above, instead of the head housing 137 described above. For example, in the example illustrated in FIG. 19, the head housing 137d has a shape that a lower end thereof (i.e., -Z side) is an open end 1373d. In this case, the conical mirror 1352 may be disposed below the open end 1373d of the head housing 137d. Consequently, even when the opening 1371 is not formed in the head housing 137d (see FIG. 3), the conical mirror 1352 is capable of emitting the processing light EL toward the workpiece W. A light transmitting parallel plate may be provided on an emission side of the fθ lens 1351 (typically, between the fθ lens 1351 and the conical mirror 1352) to suspend the support member 1354d from the parallel plane plate.

The processing system SYSd in the fourth example embodiment described above is capable of achieving the same effect as an effect that is achievable by the processing system SYSa in the first example embodiment described above.

At least one of the processing system SYSb in the second example embodiment and the processing system SYSc in the third example embodiment described above may include the configuration requirements that are specific to the processing system SYSd in the fourth example embodiment. The configuration requirements that are specific to the process system SYSd in the fourth example embodiment include those related to a method of supporting the conical mirror 1352.

### (5) Processing System SYSe in Fifth example embodiment

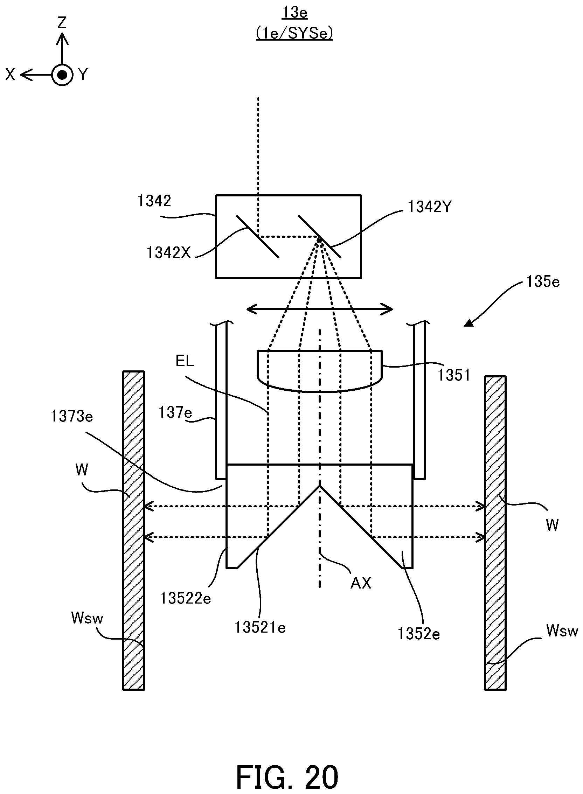

Next, the processing system SYS in a fifth example embodiment (in the below described description, the processing system SYS in the fifth example embodiment is referred to as a "processing system SYSe") will be described. The processing system SYSe in the fifth example embodiment is different from the processing system SYSa in the first example embodiment described above in that it includes a processing apparatus 1e instead of the processing apparatus 1. Other features of the processing system SYSe may be the same as those of the processing system SYSa. The processing apparatus 1e is different from the processing apparatus 1 described above in that it includes a processing head 13e instead of the processing head 13. Other features of the processing apparatus 1e may be the same as those of the processing apparatus 1. The processing head 13e is different from the processing head 13 described above in that it includes an objective optical system 135e instead of the objective optical system 135. Other features of the processing head 13e may be the same as those of the processing head 13. Therefore, in the following, the objective optical system 135e in the fifth example embodiment will be described with reference to FIG. 20. FIG. 20 is a cross-sectional view that illustrates a configuration of the objective optical system 135e in the fifth example embodiment.

As illustrated in FIG. 20, the objective optical system 135e is different from the objective optical system 135 in that it includes a conical mirror 1352e instead of the conical mirror 1352. Other features of the objective optical system 135e may be the same as those of the objective optical system 135.

The conical mirror 1352e is different from the conical mirror 1352 having the convex reflection surface 13521 corresponding to at least a part of the conical shape, in that it includes a concave reflection surface 13521e corresponding to at least a part of the conical shape. Furthermore, the conical mirror 1352e is different from the conical mirror 1352 having the convex reflection surface 13521 corresponding to at least a part of the conical shape, in that it includes a refractive surface 13522e corresponding to at least a part of the cylindrical shape. Other features of the conical mirror 1352e may be the same as those of the conical mirror 1352.

The conical mirror 1352e may be disposed such that a concave surface of the reflection surface 13521e faces opposite to the fθ lens 1351, for example. Consequently, the processing light EL emitted from the fθ lens 1351 enters an end face that is different from the reflection surface 13521e of the conical mirror 1352e, and reaches the reflection surface 13521e through the inside of the conical mirror 1352e. The reflection surface 13521e, similarly to the reflection surface 13521, reflects the processing light EL emitted from the fθ lens 1351 toward the workpiece W. That is, it may be considered that the conical mirror 1352e serves as a so-called inner surface reflection mirror that allows internal reflection of the processing light EL.

Here, the reflection surface 13521e of a conical shape has zero optical power in a direction (a so-called meridional direction) including a cross section including the optical axis AX (e.g., at least one of an XZ plane and a YZ plane), and has negative optical power in a sagittal direction that is perpendicular to the meridional direction. On the other hand, since the refractive surface 13522e is a cylindrical refractive surface centered on the optical axis AX, it has zero refractive power (optical power) in the meridional direction, and has positive refractive power (optical power) in the sagittal direction. Therefore, the action that a beam spot is distorted in the sagittal direction by the reflection of the reflection surface 13521e, may be reduced by the refraction of the refractive surface 13522e.

The refractive surface 13522e is not limited to of a shape having at least a part of the cylindrical shape, but may be of a shape having at least a part of a prismatic shape. At this time, the reflection surface 13521e may be a shape having at least a part of the pyramid shape.

Furthermore, reflective coating may be provided on the concave surface of the reflection surface 13521e (on the surface facing opposite to the fθ lens 1351).

The processing system SYSe inthe fifth example embodiment described above is capable of achieving the same effect as an effect that is achievable by the processing system SYSa in the first example embodiment described above.

In the fifth example embodiment, the processing head 13e may include a head housing 137e that is different in shape from the head housing 137 described above, instead of the head housing 137 described above. For example, as illustrated in FIG. 20, the head housing 137e has a shape that a lower end thereof (i.e., -Z side) thereof is an open end 1373e. In this case, a part of the conical mirror 1352e (especially, a part including the optical path of the processing light EL reflected by the reflection surface 13521e) may be disposed below the open end 1373e of the head housing 137e. Consequently, even when the opening 1371 is not formed in the head housing 137e (see FIG. 3), the conical mirror 1352e is capable of emitting the processing light EL toward the workpiece W.

In addition, the objective optical system 135e may include a pyramid mirror having a concave reflection surface corresponding to at least a part of the pyramid shape, instead of the conical mirror 1352e having the concave reflection surface 13521e corresponding to at least a part of the conical shape. The objective optical system 135e may include a reflection optical system having a concave reflection surface that may reflect the processing light EL emitted from the fθ lens 1351 in the direction intersecting with the optical axis AX of the fθ lens 1351.

Furthermore, at least one of the processing system SYSb in the second example embodiment to the processing system SYSd in the fourth example embodiment described above may include the configuration requirements that are specific to the processing system SYSe in the fifth example embodiment. The configuration requirements that are specific to the processing system SYSe in the fifth example embodiment include those related to the conical mirror 1352e.

### (6) Processing System SYSf in Sixth Example Embodiment

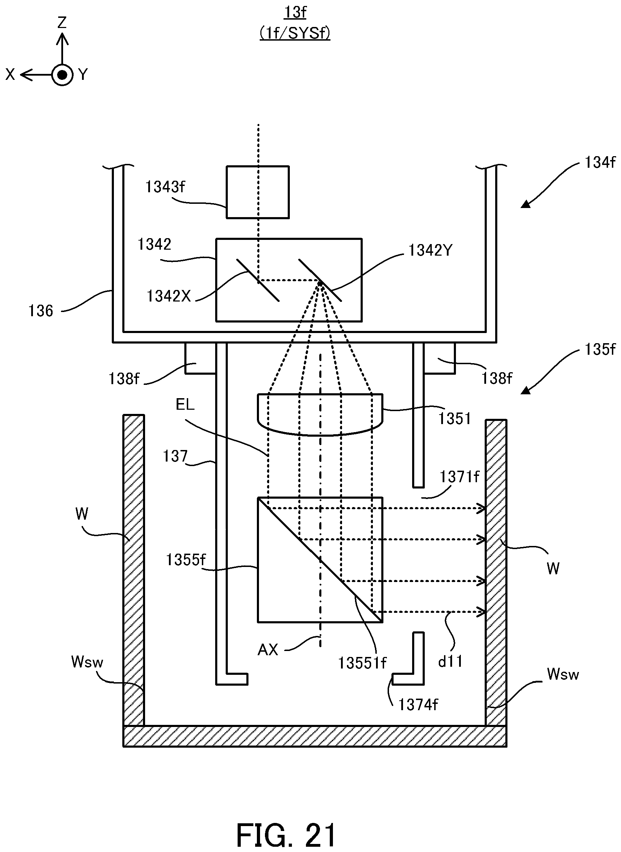

Next, the processing system SYS in a sixth example embodiment (in the below described description, the processing system SYS in the sixth example embodiment is referred to as a "processing system SYSf') will be described. The processing system SYSf in the sixth example embodiment is different from the processing system SYSa in the first example embodiment described above in that it includes a processing apparatus 1f instead of the processing apparatus 1. Other features of the processing system SYSf may be the same as those of the processing system SYSa. The processing apparatus 1f is different from the processing apparatus 1 described above in that it includes a processing head 13f instead of the processing head 13. Other features of the processing apparatus 1f may be the same as those of the processing apparatus 1. The processing head 13f is different from the processing head 13 described above in that it includes a state control optical system 134f and an objective optical system 135f instead of the state control optical system 134 and the objective optical system 135. Other features of the processing head 13f may be the same as those of the processing head 13. Therefore, in the following, the state control optical system 134f and the objective optical system 135f in the sixth example embodiment will be described with reference to FIG. 21. FIG. 21 is a cross-sectional view that illustrates structures of the state control optical system 134f and the objective optical system 135f in the sixth example embodiment.

As illustrated in FIG. 21, the state control optical system 134f is different from the state control optical system 134 in that it includes a polarization control optical system 1343f. Therefore, in the sixth example embodiment, the workpiece W is irradiated with each of the processing light EL and the measurement light ML from the combining optical system 133, through the shape change optical system 1341 (which is not illustrated in FIG. 21), the polarization control optical system 1343f and the Galvano mirror 1342. Furthermore, the measurement light ML from the workpiece W enters the combining optical system 133 through the shape change optical system 1341, the polarization control optical system 1343f and the Galvano mirror 1342. Other features of the state control optical system 134f may be the same as those of the state control optical system 134f. In the example illustrated in FIG. 21, the state control optical system 134f includes the shape change optical system 1341, but the state control optical system 134f may not include the shape change optical system 1341.

The objective optical system 135e is different from the objective optical system 135 in that it includes a polarized beam splitter 1355f instead of the conical mirror 1352. Therefore, in the sixth example embodiment, the workpiece W is irradiated with each of the processing light EL and the measurement light ML from the state control optical system 134f, through the fθ lens 1351 and the polarized beam splitter 1355f. That is, the fθ lens 1351 condenses each of the processing light EL and the measurement light ML on the workpiece W through the polarized beam splitter 1355f. Furthermore, the measurement light ML from the workpiece W enters the state control optical system 134f through the fθ lens 1351 and the polarized beam splitter 1355f. Other features of the objective optical system 135f may be the same as those of the objective optical system 135.

The polarized beam splitter 1355f has a polarization split surface 13551f. The polarization split surface 13551f is, for example, a planar optical surface. The polarization split surface 13551f is inclined to the optical axis AX of the fθ lens 1351. The polarization split surface 13551f is capable of reflecting each of the processing light EL and the measurement light ML in a first polarization state. Therefore, the polarization split surface 13551f may serve as a reflection surface. For example, the polarization split surface 13551f is capable of reflecting each of the processing light EL and the measurement light ML in a state where it has a polarized direction by which it is an s-polarized light with respect to the polarization split surface 13551f. On the other hand, each of the processing light EL and the measurement light ML in a second polarization state that is different from the first polarization state may pass through the polarization split surface 13551f. That is, the polarization split surface 13551f is capable of transmitting each of the processing light EL and the measurement light ML in the second polarization state. For example, each of the processing light EL and the measured light ML in a state where it has a polarized direction by which it is a p-polarized light with respect to the polarization split surface 13551f is capable of passing through the polarization split surface 13551f.

The polarization control optical system 1343f is capable of changing the polarization state of each of the processing light EL and the measurement light ML. For this reason, the polarization control optical system 1343f may be referred to as a polarization state change apparatus. Specifically, the polarization control optical system 1343f may change the polarization state of the processing light EL such that the processing light EL is reflected by the polarization split surface 13551f. The polarization control optical system 1343f may change the polarization state of the measurement light ML such that the measurement light ML is reflected by the polarization split surface 13551f. The polarization control optical system 1343f may change the polarization state of the processing light EL such that the processing light EL passes through the polarization split surface 13551f. The polarization control optical system 1343f may change the polarization state of the measurement light ML such that the measurement light ML passes through the polarization split surface 13551f.

To control the polarization state of each of the processing light EL and the measurement light ML, the polarization control optical system 1343f may include, for example, a polarization control optical member including at least one of a polarizing plate and a wave plate. In this case, the polarization control optical system 1343f may change the polarization state of the processing light EL by rotating the polarization control optical member around its optical axis.

By changing the polarization state of the processing light EL by the polarization control optical system 1343f as described above, the state of the polarized beam splitter 1355f is switched between a state of reflecting the processing light EL and a state of not reflecting the processing light EL (that is, a state of transmitting the processing light EL). Therefore, the polarized beam splitter 1355f is capable of emitting the processing light EL in at least two directions. Similarly, by changing the polarization state of the measurement light ML by the polarization control optical system 1343f as described above, the state of the polarized beam splitter 1355f is switched between a state of reflecting the measurement light ML and a state of not reflecting the measurement light ML (that is, a state of transmitting the measurement light ML). Therefore, the polarized beam splitter 1355f is capable of emitting the measurement light ML in at least two directions. Hereinafter, in order to omit a duplicated description, an emission aspect of the processing light EL by the polarized beam splitter 1355f will be described, but the same shall apply to an emission aspect of the measurement light ML by the polarized beam splitter 1355f. That is, the following description in the seventh example embodiment will be a description of the emission aspect of the measurement light ML by the polarized beam splitter 1355f, by replacing the word "processing light EL" with the word "measurement light ML".

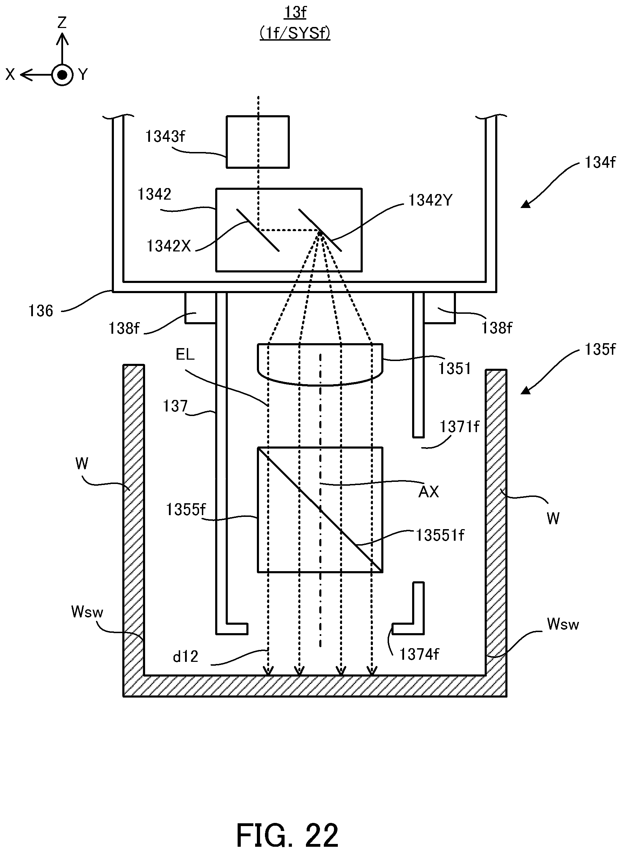

Specifically, when the processing light EL is in the first polarization state, as illustrated in FIG. 21, the state of the polarized beam splitter 1355f is a state of being capable of reflecting the processing light EL. Consequently, the polarized beam splitter 1355f is capable of emitting the processing light EL in a first direction d11 (e.g., the direction intersecting with the optical axis AX, and the X axis direction in the example illustrated in FIG. 21). Incidentally, an opening 1371f through which the processing light EL reflected by the polarized beam splitter 1355f can pass, may be formed in the head housing 137. On the other hand, when the processing light EL is in the second polarization state, as illustrated in FIG. 22 that illustrates the polarized beam splitter 1355f entered by the processing light EL in the second polarization state, the state of the polarized beam splitter 1355f is a state of transmitting the processing light EL. Consequently, the polarized beam splitter 1355f is capable of emitting the processing light EL in a second direction d12 that is different from the first direction d11 (e.g., a direction along the optical axis AX, and the Z axis direction in the example illustrated in FIG. 22). Incidentally, an opening 1374f through which the processing light EL passing through the polarized beam splitter 1355f passes, may be formed in the head housing 137.

The polarization state of the processing light EL is a specific example of the state of the processing light EL. In this case, it may be considered that the objective optical system 135f (especially, the polarized beam splitter 1355f) emits the processing light EL in a first direction when the processing light EL is in a first state, and emits the processing light EL in a second direction that is different from the first direction when the processing light EL is in a second state that is different from the first state. The polarization control optical system 1343f may also be referred to as a beam state change apparatus.

As described above, the processing system SYSf irradiates the surface of the workpiece W (e.g., the inner wall surface Wsw) facing the space WSP formed in the workpiece W (typically, the space WSP extending along the optical axis AX) with the processing light EL. In this case, only by the polarized beam splitter 1355f emitting the processing light EL in at least two directions, the processing system SYSf may not be able to irradiate the inner wall surface Wsw of the workpiece W with the processing light EL over a range of 360 degrees surrounding the optical axis AW. For example, the processing system SYSf may not be able to irradiate a part of the annular area EA illustrated in FIG. 6 with the processing light EL. Therefore, in the sixth example embodiment, the processing head 13f may include a housing driving system 138f for rotating the head housing 137 around the optical axis AX (or around an axis parallel to the optical axis AX). The rotation of the head housing 137 by the housing driving system 138f allows the polarized beam splitter 1355f contained in the head housing 137 to be rotated around the optical axis AX (or around an axis parallel to the optical axis AX). Consequently, the emitting direction of the processing light EL from the polarized beam splitter 1355f is changed to be around the optical axis AX. Therefore, the processing system SYSf is capable of irradiating the inner wall surface Wsw of the workpiece W with the processing light EL over a range of 360 degrees surrounding the optical axis AX.

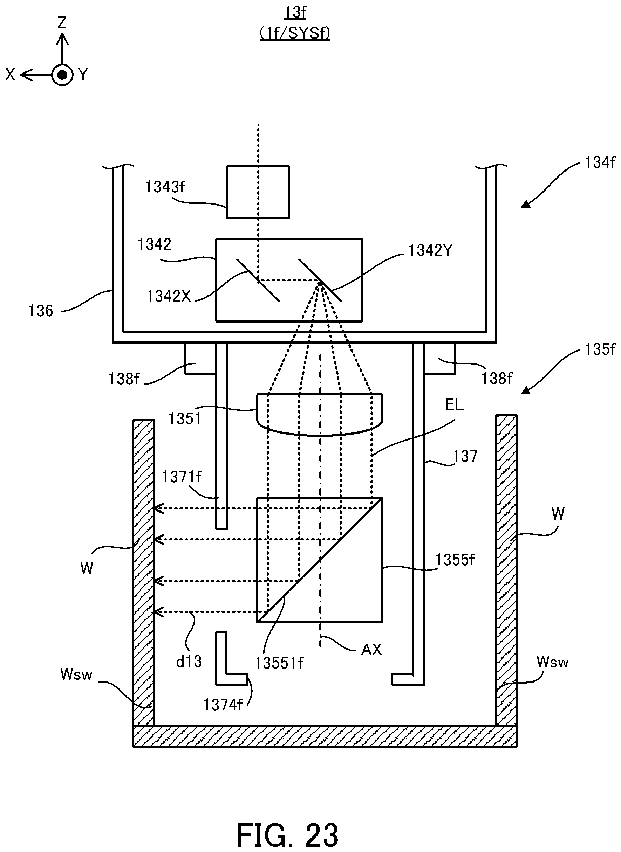

However, when the polarized beam splitter 1355f is rotated, the polarization state of the processing light EL may be changed with respect to the polarization split surface 13551f. For example, the processing light EL that is an s-polarized light with respect to the polarization split surface 13551f of the polarized beam splitter 1355f before rotation, may not be an s-polarized light with respect to the polarization split surface 13551f of the polarized beam splitter 1355r after rotation. Similarly, the processing light EL that is a p-polarized light with respect to the polarization split surface 13551f of the polarized beam splitter 1355f before rotation, may not be a p-polarized light with respect to the polarization split surface 13551f of the polarized beam splitter 1355f after rotation. Therefore, the polarization control optical system 1343f may change the polarization state of the processing light EL such that the processing light EL has an appropriate polarized direction with respect to the polarization split surface 13551f in accordance with the rotation of the polarized beam splitter 1355f. That is, the polarization control optical system 1343f may change the polarization state of the processing light EL such that the processing light EL has an appropriate polarized direction with respect to the polarization split surface 13551f when the polarized beam splitter 1355f is rotated. For example, as illustrated in FIG. 21, when the polarized beam splitter 1355f reflects the processing light EL in the first direction d11 toward -X side, the polarization control optical system 1343f may change the polarization state of the processing light EL such that the processing light EL has an appropriate polarized direction with respect to the polarization split surface 13551f in the state illustrated in FIG. 21 (e.g., such that the processing light EL is in the first polarization state). On the other hand, FIG. 23 illustrates the polarized beam splitter 1355f that is rortated by a predetermined angle around the optical axis AX from the state illustrated in FIG. 21. In this case, the polarized beam splitter 1355f reflects the processing light EL in a third direction d13 that is different from the first direction d11 (specifically, a direction toward + X side). In this case, the polarization control optical system 1343f may change the polarization state of the processing light EL such that the processing light EL has an appropriate polarized direction with respect to the polarization split surface 13551f in the state illustrated in FIG. 23 (e.g., such that the processing light EL is in the second polarization state that is different from the first polarization state).

The processing system SYSf in the sixth form described above is capable of achieving the same effect as an effect that is achievable by the processing system SYSa in the first example embodiment described above. In addition, the processing system SYSf is capable of processing a plane intersecting with the optical axis AX (especially, a plane perpendicular to the optical axis AX) by using the processing light EL passing through the polarized beam splitter 1355f. Furthermore, the processing system SYSf is capable of measuring the plane intersecting with the optical axis AX (especially, the plane perpendicular to the optical axis AX) by using the measurement light ML passing through the polarized beam splitter 1355f.

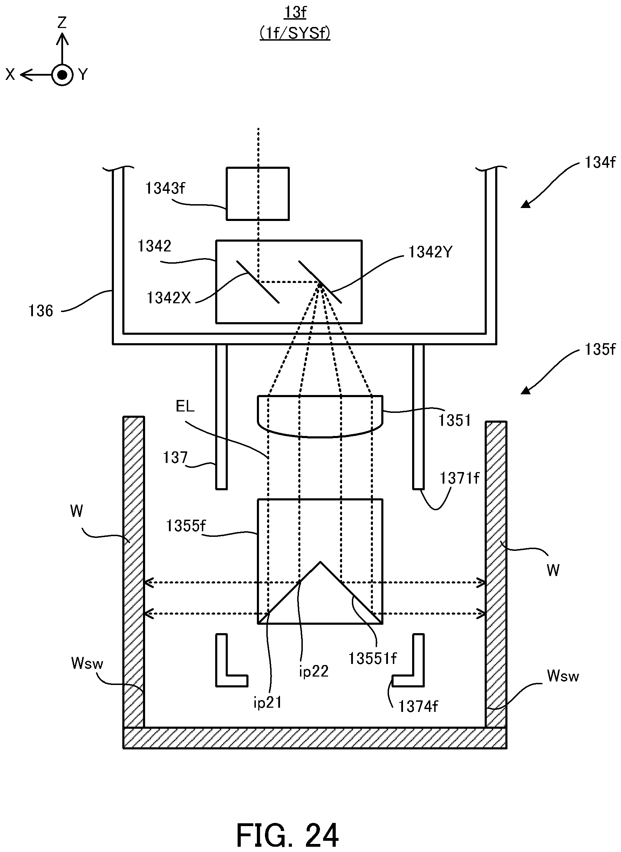

The polarization split surface 13551f may not necessarily be a planar optical surface. For example, the polarization split surface 13551f may be an optical surface including a curved surface. FIG. 24 illustrates an example of the polarization split surface 13551f including a curved surface. As illustrated in FIG. 24, the polarized beam splitter 1355f may include the polarization split surface 13551f of a convex shape corresponding to at least a part of a conical shape. In this case, the polarized beam splitter 1355f may substantially serve as the conical mirror 1352 described above. That is, the polarized beam splitter 1355f is capable of irradiating the inner wall surface Wsw of the workpiece W with each of the processing light EL and the measurement light ML over a range of 360 degrees surrounding the optical axis AX, without rotating around the optical axis AX (or around an axis parallel to the optical axis AX). Therefore, the processing head 13f may not include the housing driving system 138f. Furthermore, although it is not illustrated for simplicity of illustration, the polarized beam splitter 1355f may include the convex polarization split surface 13551f corresponding to at least a part of a pyramid shape. The polarized beam splitter 1355f may include the concave polarization split surface 13551f corresponding to at least a part of the conical shape or the pyramid shape. The polarized beam splitter 1355f may include the polarization split surface 13551f including a plurality of polarization split surfaces that face in different directions.

Furthermore, when the polarization split surface 13551f is an optical surface including a curved surface, the curvature of each part of the polarization split surface 13551f may vary depending on the position of each part on the polarization split surface 13551f. Consequently, as described in the first example embodiment, the shape of the spot of the processing light EL on the surface of the workpiece W may vary depending on the incident position of the processing light EL on the polarization split surface 13551f. Similarly, the shape of the spot of the measurement light ML on the surface of the workpiece W may vary depending on the incident position of the measurement light ML on the polarization split surface 13551f. Therefore, even in the sixth example embodiment, as in the first example embodiment, the state control optical system 134f may include the shape change optical system 1341 that is configured to change the respective cross-sectional shapes of the processing light EL and the measurement light ML based on the respective incident positions of the processing light EL and the measurement light ML on the polarization split surface 13551f. In this case, the shape change optical system 1341 may change the cross-sectional shape of the processing light EL such that the cross-sectional shape of the processing light EL propagating toward a first incident position ip21 on the polarization split surface 13551f (see FIG. 24) is a fifth cross-sectional shape by which the shape of the spot of the processing light EL on the surface of the workpiece W can be a desired shape. The shape change optical system 1341 may change the cross-sectional shape of the processing light EL such that the cross-sectional shape of the processing light EL propagating toward a second incident position ip22 on the polarization split surface 13551f that is different from the first incident position ip21 (see FIG. 24) is a sixth cross-sectional shape that is different from the fifth cross-sectional shape and by which the shape of the spot of the processing light EL on the surface of the workpiece W can be a desired shape. The shape change optical system 1341 may change the cross-sectional shape of the measurement light ML such that the cross-sectional shape of the measurement light ML propagating toward a third incident position on the polarization split surface 13551f is a seventh cross-sectional shape by which the shape of the spot of the measurement light ML on the surface of the workpiece W can be a desired shape. The shape change optical system 1341 may change the cross-sectional shape of the measurement light ML such that the cross-sectional shape of the measurement light ML propagating toward a fourth incident position on the polarization split surface 13551f that is different from the third incident position is an eighth cross-sectional shape that is different from the seventh cross-sectional shape and by which the shape of the spot of the measurement light ML on the surface of the workpiece W can be a desired shape. Alternatively, even in the sixth example embodiment, as in the second example embodiment, the objective optical system 135f may include the shape change optical system 1353b that is configured to change the respective cross-sectional shapes of the processing light EL and the measurement light ML.

Furthermore, the shape of the spot (or the fluence) of the processing light EL on the surface of the workpiece W may vary depending on the polarization state of the processing light EL. Therefore, the shape change optical system 1341 may change the cross-sectional shape and/or cross-sectional size of the processing light EL such that the shape and/or size of the spot of the processing light EL on the surface of the workpiece W is a desired shape and/or size (or such that the fluence of the processing light EL on the surface of the workpiece W has a desired amount), based on the polarization state of the processing light EL. That is, the shape change optical system 1341 may change the cross-sectional shape and/or cross-sectional size of the processing light EL when the polarization control optical system 1343f changes the polarization state of the processing light EL. Similarly, the shape and/or size of the spot of the measurement light ML on the surface of the workpiece W may vary depending on the polarization state of the measurement light ML. Therefore, the shape change optical system 1341 may change the cross-sectional shape and/or cross-sectional size of the measurement light ML such that the shape and/or size of the spot of the measurement light ML on the surface of the workpiece W is a desired shape and/or desired size, based on the polarization state of the measurement light ML. That is, the shape change optical system 1341 may change the cross-sectional shape and/or cross-sectional size of the measurement light ML when the polarization control optical system 1343f changes the polarization state of the measurement light ML.

Furthermore, the objective optical system 135f may include, instead of the polarized beam splitter 1355f, any polarization change optical member that is configured to change the emitting directions of the processing light EL and the measurement light ML in accordance with the polarization states of the processing light EL and the measurement light ML, respectively. An example of such a polarization change optical member is a Wollaston prism.

Furthermore, in the description described above, the objective optical system 135f changes the emitting direction of the processing light EL in accordance with the polarization state of the processing light EL, by using a polarized beam splitter 1355f. The objective optical system 135f, however, may change the emitting direction of the processing light EL in accordance with the wavelength of the processing light EL. In this case, the objective optical system 135f may include a direction change optical member that is configured to change the emitting direction of the processing light EL in accordance with the wavelength of the processing light EL. The direction change optical member may emit the processing light EL in a first direction when the wavelength of the processing light EL is a first wavelength. The direction change optical member may emit the processing light EL in a second direction that is different from the first direction, when the wavelength of the processing light EL is a second wavelength that is different from the first wavelength. An example of such a direction change optical member is a dichroic mirror. The processing system SYSf may switch the wavelength of the processing light EL by selecting one processing light source 11 that actually generates the processing light EL from among a plurality of processing light sources 11 each of which is configured to generate the processing light EL of a different wavelength. Alternatively, the processing system SYSf may switch the wavelength of the processing light EL by using a wavelength change optical member that is configured to switch the wavelength of the processing light EL. Although the details are omitted for simplicity of explanation, the objective optical system 135f may change the emitting direction of the measurement light ML in accordance with the wavelength of the measurement light ML, in the same manner as when changing the emitting direction of the processing light EL in accordance with the wavelength of the processing light EL.

Furthermore, at least one of the processing system SYSb in the second example embodiment to the processing system SYSe in the fifth example embodiment described above may include the configuration requirements that are specific to the processing system SYSf in the sixth example embodiment. The configuration requirements that are specific to the processing system SYSf in the sixth example embodiment include those related to polarized beam splitter 1355f.

### (7) Processing System SYSg in Seventh Example Embodiment

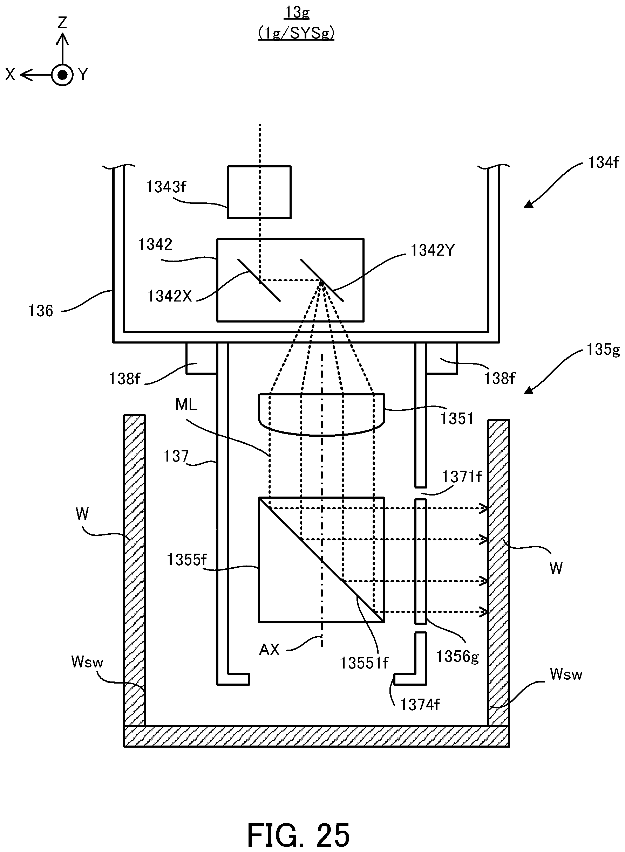

Next, the processing system SYS in a seventh example embodiment (in the below described description, the processing system SYS in the seventh example embodiment is referred to as a "processing system SYSg") will be described. The processing system SYSg in the seventh example embodiment is different from the processing system SYSf in the sixth example embodiment described above in that it includes a processing apparatus 1g instead of the processing apparatus 1f. Other features of the process system SYSg may be the same as those of the processing system SYSf. The processing apparatus 1g is different from the processing apparatus 1f described above in that it includes a processing head 13g instead of the processing head 13f. Other features of the processing apparatus 1g may be the same as those of the processing apparatus 1f. The processing head 13g is different from the processing head 13f described above in that it includes an objective optical system 135g instead of the objective optical system 135f. Other features of the processing head 13g may be the same as those of the processing head 13f. Therefore, in the following, the objective optical system 135g in the seventh example embodiment will be described with reference to FIG. 25. FIG. 25 is a cross-sectional view that illustrates a configuration of the objective optical system 135g in the seventh example embodiment.

As illustrated in FIG. 25, the objective optical system 135g is different from the objective optical system 135f in that it further includes a wave plate (e.g., a quarter wave plate) 1356g. Other features of the objective optical system 135g may be the same as those of the objective optical system 135f.

The wave plate 1356g is disposed on the optical path of the measurement light ML. In the example illustrated in FIG. 25, the wave plate 1356g is disposed on the optical path of the measurement light ML at a position that is away toward the workpiece W from the polarized beam splitter 1355f, especially on the optical path of the measurement light ML between the polarized beam splitter 1355f and the workpiece W. The wave plate 1356g, however, may be disposed at another position. For example, the wave plate 1356g may be disposed on the optical path of the measurement light ML between the fθ lens 1351 and the polarized beam splitter 1355f. The wave plate 1356g may be attached to an exit surface of the polarized beam splitter 1355f.

The wave plate 1356g is used to distinguish the desirable measurement light ML through the workpiece W and the undesirable measurement light ML from an object that is different from the workpiece W, in the measurement optical system 132. Specifically, as described above, the workpiece W is irradiated with the measurement light ML from the measurement optical system 132 through the objective optical system 135g, and the measurement light ML from the workpiece W returns to the measurement optical system 132 through the objective optical system 135g. Therefore, the desirable measurement light ML through the workpiece W corresponds to a light passing through the wave plate 1356g twice. On the other hand, the undesirable measurement light ML from the object that is different from the workpiece W may return to the measurement optical system 132. For example, the measurement light ML reflected by the end face of the fθ lens 1351 may return to the measurement optical system 132 as the undesirable measurement light ML. The undesirable measurement light ML, however, returns to the measurement optical system 132 without passing through the wave plate 1356g. It is thus possible to distinguish the desirable measurement light ML and the undesirable measurement light ML due to their optical properties (e.g., polarization states).

In this case, the measurement optical system 132 may include an optical system that transmits the measurement light ML such that the desirable measurement light ML enters the detector 1326, but that attenuates or shields the measurement light ML such that the undesirable measurement light does not enter the detector 1326. Consequently, the detector 1326 is selectively detectable the desirable measurement light ML, and that reduces the possibility that the measurement accuracy of the workpiece W using the measurement light ML is deteriorated.

As described above, the processing system SYSg in the seventh example embodiment is capable of properly reducing the deterioration of the measurement accuracy of the workpiece W using the measurement light ML, while achieving the same effect as an effect that is achievable by the processing system SYSf in the sixth example embodiment described above.

At least one of the processing system SYSa of the first example embodiment to the processing system SYSe in the fifth example embodiment described above may include the configuration requirements that are specific to the processing system SYSg in the seventh example embodiment. The configuration requirements that are specific to the processing system SYSg in the seventh example embodiment include those related to the wave plate 1356g (i.e., those for preventing the detection of the undesirable measurement light ML).

### (8) Processing System SYSh in Eighth Example Embodiment

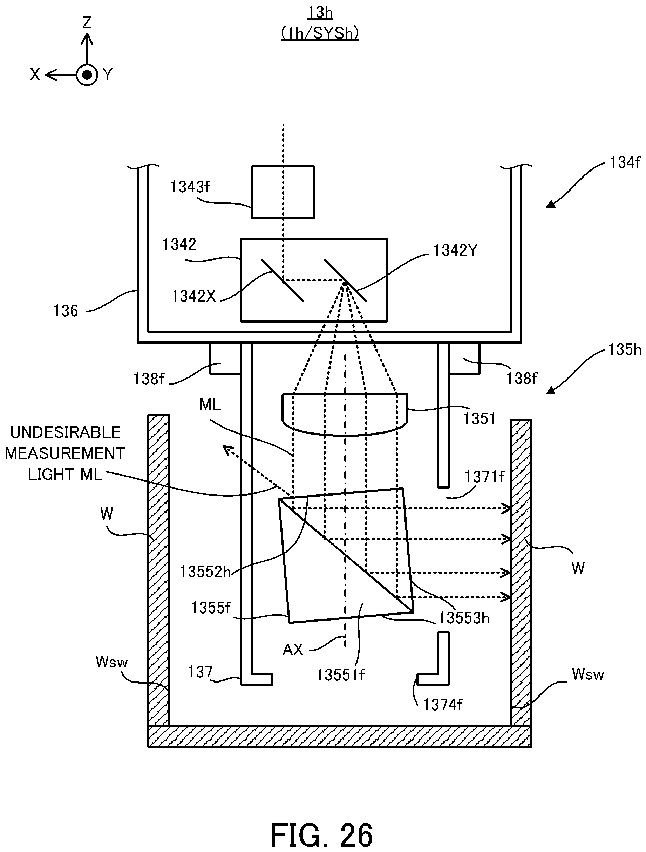

Next, the processing system SYS in an eighth embodiment (in the below described description, the processing system SYS in the eighth embodiment is referred to as a "processing system SYSh") will be described. The processing system SYSh in the eighth example embodiment is different from the processing system SYSf in the sixth example embodiment described above in that it includes a processing apparatus 1h instead of the processing apparatus 1f. Other features of the process system SYSh may be the same as those of the processing system SYSf. The processing apparatus 1h is different from the processing apparatus 1f described above in that it includes a processing head 13h instead of the processing head 13f. Other features of the processing apparatus 1h may be the same as those of the processing apparatus 1f. The processing head 13h is different from the processing head 13f described above in that it includes an objective optical system 135h instead of the objective optical system 135f. Other features of the processing head 13h may be the same as those of the processing head 13f. Therefore, in the following, the objective optical system 135h of the eighth example embodiment will be described with reference to FIG. 26. FIG. 26 is a cross-sectional view that illustrates a configuration of the objective optical system 135h in the eighth example embodiment.

As illustrated in FIG. 26, the objective optical system 135h is different from the objective optical system 135f in that the polarized beam splitter 1355f is aligned to the optical axis AX such that an incident surface 13552h of the polarized beam splitter 1355f is inclined to the optical axis AX of the fθ lens 1351. That is, the objective optical system 135h is different from the objective optical system 135f in that the polarized beam splitter 1355f is aligned to the optical axis AX such that the incident surface 13552h is inclined to the respective propagating directions of the processing light EL and the measurement light ML from the fθ lens 1351. In this case, in order to incline the incident surface 13552h to the optical axis AX (i.e., in order to incline it to the respective propagating directions of the processing light EL and the measurement light ML), the polarized beam splitter 1355f is typically aligned so as to be fixed in a condition of being rotated by a predetermined angle around an axis intersecting with the optical axis AX (an axis intersecting with the respective propagating directions of the processing light EL and the measurement light ML). The incident surface 13552h is an optical surface of the polarized beam splitter 1355f entered by each of the processing light EL and the measurement light ML from the fθ lens 1351. Other features of the objective optical system 135h may be the same as those of the objective optical system 135f.

When the incident surface 13552h is inclined to the optical axis AX, as compared with when the incident surface 13552h is perpendicular to the optical axis AX, even if the measurement light ML propagating along a direction parallel to the optical axis AX is unexpectedly reflected by the incident surface 13552h, the undesirable measurement light ML reflected by the incident surface 13552h propagates along the direction intersecting with the optical axis AX, as illustrated in FIG. 26. That is, the undesirable measurement light ML reflected by the incident surface 13552h propagates along an optical path that is inclined to the optical path of the measurement light ML from the fθ lens 1351. Therefore, the undesirable measurement light ML is likely to propagate in a direction that is different from a direction in which the fθ lens 1351 is present. Consequently, the undesirable measurement light ML is less likely to return to the measurement optical system 132 through the fθ lens 1351. On the other hand, when the incident surface 13552h is perpendicular to the optical axis AX, if the measurement light ML propagating along the direction parallel to the optical axis AX is /unexpectedly reflected by the incident surface 13552h, the undesirable measurement light ML reflected by the incident surface 13552h propagates along the direction parallel to the optical axis AX. Therefore, the undesirable measurement light ML is likely to progress in the direction in which the fθ lens 1351 is present. Consequently, the undesirable measurement light ML is likely to return to the measurement optical system 132 through the fθ lens 1351.

Therefore, in the eighth example embodiment, the desirable measurement light ML through the workpiece W enters the detector 1326, whereas the undesirable measurement light ML reflected by the incident surface 13552h of the polarized beam splitter 1355f is less likely to enter the detector 1326. This reduces the possibility that the measurement accuracy of the workpiece W using the measurement light ML is deteriorated. As described above, the processing system SYSh in the eighth example embodiment is capable of properly reducing the deterioration of the measurement accuracy of the workpiece W using the measurement light ML, while achieving the same effect as an effect that is achievable by the processing system SYSf in the sixth example embodiment described above.

Furthermore, when the incident surface 13552h is inclined to the optical axis AX, as compared with when the incident surface 13552h is perpendicular to the optical axis AX, even if the processing light EL propagating along the direction parallel to the optical axis AX is unexpectedly reflected by the incident surface 13552h, the undesirable processing light EL reflected by the incident surface 13552h is likely to propagate in the direction that is different from the direction in which the fθ lens 1351 is present. Consequently, the processing system SYSh is also capable of achieving such an effect that the undesirable processing light EL is less likely to return to the processing optical system 131 through the fθ lens 1351.

The polarized beam splitter 13553f may be aligned to the optical axis AX such that an exit surface 13553h of the polarized beam splitter 1355f is inclined to the respective propagating directions of the processing light EL and the measurement light ML toward the workpiece W from the polarization split surface 13551f. The exit surface 13553h is an optical surface of the polarized beam splitter 1355f from which each of the processing light EL and the measurement light ML propagating toward the workpiece W from the polarization split surface 13551f is emitted. In this case, even if the measurement light 13551f propagating toward the workpiece W from the polarization split surface ML is unexpectedly reflected by the exit surface 13553h, the undesirable measurement light ML reflected by the exit surface 13553h propagates along the optical path that is inclined to the optical path of the measurement light ML propagating toward the workpiece W from the polarization split surface 13551f. Therefore, the undesirable measurement light ML is likely to progress in the direction that is different from the direction in which the fθ lens 1351 is present. Consequently, the undesirable measurement light ML is less likely to return to the measurement optical system 132 through the fθ lens 1351. It is therefore possible to properly reduce the deterioration of the measurement accuracy of the workpiece W using the measurement light ML. Furthermore, for similar reasons, the processing system SYSh is also capable of achieving such an effect that the undesirable processing light EL reflected by the exit surface 13553h is unlikely to return to the processing optical system 131 through the fθ lens 1351.

Furthermore, the processing system SYSg in the seventh example embodiment described above may include the configuration requirements that are specific to the processing system SYSh in the eighth example embodiment. The configuration requirements that are specific to the processing system SYSh in the eighth example embodiment include those related to the inclination of the optical surface of the polarized beam splitter 1355f.

### (9) Processing System SYSi in Ninth Embodiment

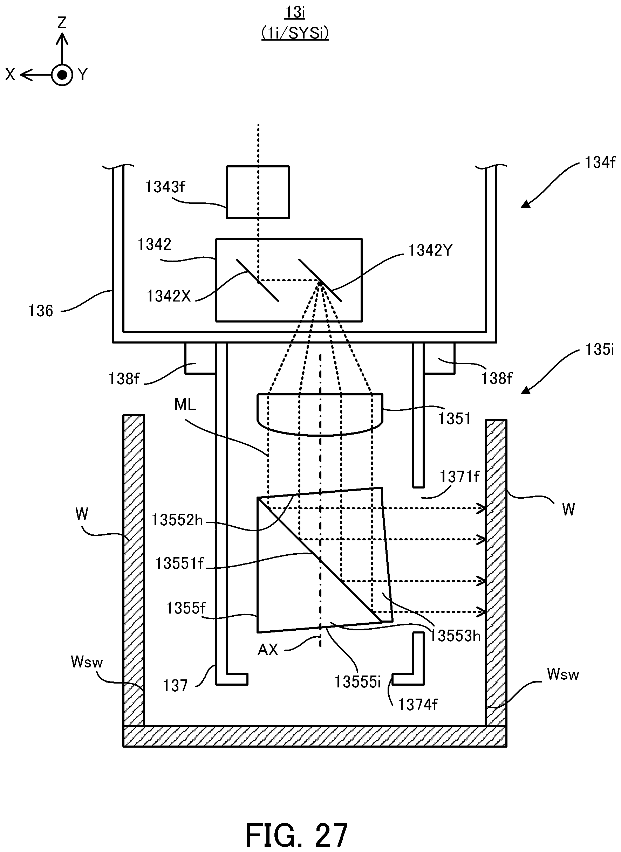

Next, the process system SYS in a ninth example embodiment (in the below described description, the processing system SYS in the ninth embodiment is referred to as a "processing system SYSi") will be described. The processing system SYSi in the ninth example embodiment is different from the processing system SYSf in the sixth example embodiment described above in that it includes a processing apparatus 1i instead of the processing apparatus 1f. Other features of the processing system SYSi may be the same as those of the processing system SYSf. The processing apparatus 1i is different from the processing apparatus 1f described above in that it includes a processing head 13i instead of the processing head 13f. Other features of the processing apparatus 1i may be the same as those of the processing apparatus 1f. The processing head 13i is different from the processing head 13f described above in that it includes an objective optical system 135i instead of the objective optical system 135f. Other features of the processing head 13i may be the same as those of the processing head 13f. Therefore, in the following, the objective optical system 135i in the ninth example embodiment will be described with reference to FIG. 27. FIG. 27 is a cross-sectional view that illustrates a configuration of the objective optical system 135i in the ninth example embodiment.

As illustrated in FIG. 27, the objective optical system 135i is different from the objective optical system 135f in that the incident surface 13552h is wedged such that the incident surface 13552h is inclined to the optical axis AX of the fθ lens 1351. That is, the objective optical system 135i is different from the objective optical system 135f in that the incident surface 13552h is wedged such that the incident surface 13552h is inclined to the respective propagating directions of the processing light EL and the measurement light ML from the fθ lens 1351. Furthermore, the objective optical system 135i is different from the objective optical system 135f in that the exit surface 13553h is wedged such that the exit surface 13553h is inclined to the respective propagating directions of the processing light EL and the measurement light ML from the polarization split surface 13551f (i.e., in that the exit surface 13553h is not perpendicular to the respective propagating directions of the processing light EL and the measurement light ML). Other features of the objective optical system 135i may be the same as those of the objective optical system 135f.

As described above, even when the incident surface 13552h is wedged, the incident surface 13552h is inclined to the respective propagating directions of the processing light EL and the measurement light ML from the fθ lens 1351. As a result, even in the ninth example embodiment, as in the eighth example embodiment, the undesirable measurement light ML reflected by the incident surface 13552h is less likely to return to the measurement optical system 132 through the fθ lens 1351, and the undesirable processing light EL reflected by the incident surface 13552h is less likely to return to the processing optical system 131 through the fθ lens 1351. Similarly, even when the exit surface 13553h is wedged, the exit surface 13553h is inclined to the propagating direction of the measurement light ML toward the workpiece W from the polarization split surface 13551f. As a result, in the ninth example embodiment, as in the eighth example embodiment, the undesirable measurement light ML reflected by the exit surface 13553h is less likely to return to the measurement optical system 132 through the fθ lens 1351, and the undesirable processing light EL reflected by the exit surface 13553h is less likely to return to the processing optical system 131 through the fθ lens 1351. Therefore, the processing system SYSi in the ninth example embodiment is capable of achieving the same effect as an effect that is achievable by the processing system SYSh in the eighth example embodiment described above.

Incidentally, the exit surface 13553h may not be wedged when the incident surface 13552h is wedged. The entrance face 13552h may not be wedged when the exit face 13553h is wedged.

Furthermore, at least one of the processing system SYSg in the seventh example embodiment and the processing system SYSh in the eighth example embodiment described above may include the configuration requirements that are specific to the processing system SYSi in the ninth example embodiment. The configuration requirements that are specific to the processing system SYSi in the ninth example embodiment include those related to the wedge of at least one of the incident surface 13552h and the exit surface 13553h.

### (10) Processing System SYSj in Tenth Embodiment

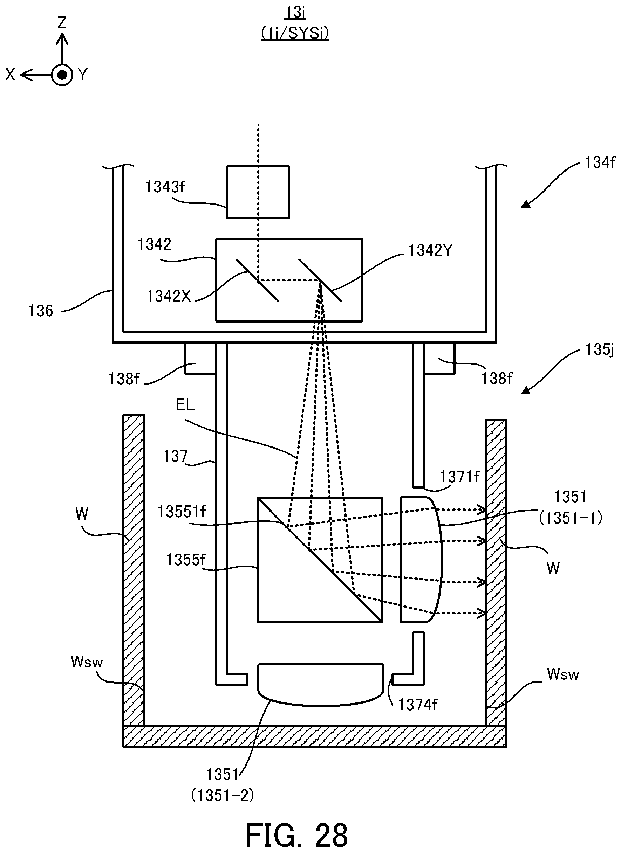

Next, the process system SYS in a tenth example embodiment (in the below described description, the processing system SYS in the tenth embodiment is referred to as a "processing system SYSj") will be described. The processing system SYSj in the tenth example embodiment is different from the processing system SYSf in the sixth example embodiment described above in that it includes a processing apparatus 1j instead of the processing apparatus 1f. Other features of the processing system SYSj may be the same as those of the processing system SYSf. The processing apparatus 1j is different from the processing apparatus 1f described above in that it includes a processing head 13j instead of the processing head 13f. Other features of the processing apparatus 1j may be the same as those of the processing apparatus 1f. The processing head 13j is different from the processing head 13f described above in that it includes an objective optical system 135j instead of the objective optical system 135f. Other features of the processing head 13j may be the same as those of the processing head 13f. Therefore, in the following, the objective optical system 135j in the tenth example embodiment will be described with reference to FIG. 28. FIG. 28 is a cross-sectional view that illustrates a configuration of the objective optical system 135j in the tenth example embodiment.

As illustrated in FIG. 28, the objective optical system 135j is different from the objective optical system 135f in that the fθ lens 1351 is is disposed on the respective optical paths of the processing light EL and the measurement light ML between the polarized beam splitter 1355f and the workpiece W. That is, the objective optical system 135j is different from the objective optical system 135f in that the fθ lens 1351 is disposed on the respective optical paths of the processing light EL and the measurement light ML that are closer to the workpiece W than to the polarized beam splitter 1355f. In the tenth example embodiment, each of the processing light EL and the measurement light ML is emitted in at least two directions (specifically, the X axis direction and the Z axis direction) from the polarized beam splitter 1355f. Therefore, the objective optical system 135j may include: an fθ lens 1351-1 disposed on the respective optical paths of the processing light EL and the measurement light ML emitted in a first direction (e.g., the X axis direction) from the polarized beam splitter 1355f; and an fθ lens 1351-2 disposed on the respective optical paths of the processing light EL and the measurement light ML emitted in a second direction (e.g., the Z axis direction) from the polarized beam splitter 1355f. Other features of the objective optical system 135j may be the same as those of the objective optical system 135f.

Ws described above, when the fθ lens 1351 is disposed between the polarized beam splitter 1355f and the workpiece W, the processing light EL before the condensing by the fθ lens 1351 enters the polarized beam splitter 1355f. That is, the processing light EL having a relatively large defocusing amount enters the polarized beam splitter 1355f. Therefore, as compared with when the processing light EL after the condensing by the fθ lens 1351 (i.e., the processing light EL having a relatively small defocusing amount) enters the polarized beam splitter 1355f, the fluence of the processing light EL at the position of the polarized beam splitter 1355f is reduced. This reduces the possibility that the polarized beam splitter 1355f is damaged by the processing light EL. Therefore, the processing system SYSj in the tenth example embodiment is capable of reducing the possibility that the polarized beam splitter 1355f is damaged, while achieving the same effect as an effect that is achievable by the processing system SYSf in the sixth example embodiment described above.

When the fθ lens 1351 includes a plurality of optical members, a part of the plurality of optical members may be disposed on the respective optical paths of the processing light EL and the measurement light ML between the polarized beam splitter 1355f and the workpiece W, and another part of the plurality of optical members may be disposed on the incident side of the polarized beam splitter 1355f (typically, between the Galvano mirror 1342 and the polarized beam splitter 1355f). Furthermore, the fθ lens 1351 may be a reflection optical system, a reflection refraction optical system, or a diffractive optical system.

At least one of the processing system SYSa in the first example embodiment to the processing system SYSi in the ninth example embodiment described above may include the configuration requirements that are specific to the processing system SYSj in the tenth example embodiment. The configuration requirements that are specific to the processing system SYSj in the tenth example embodiment include those related to the arrangement position of the fθ lens 1351. That is, the configuration requirements that are specific to the processing system SYSj in the tenth example embodiment include such a configuration requirement that the fθ lens 1351 is disposed between the polarized beam splitter 1355f and the workpiece W (or between the conical mirror 1352 described above and the workpiece W).

### (11) Processing System SYSk in Eleventh Example Embodiment

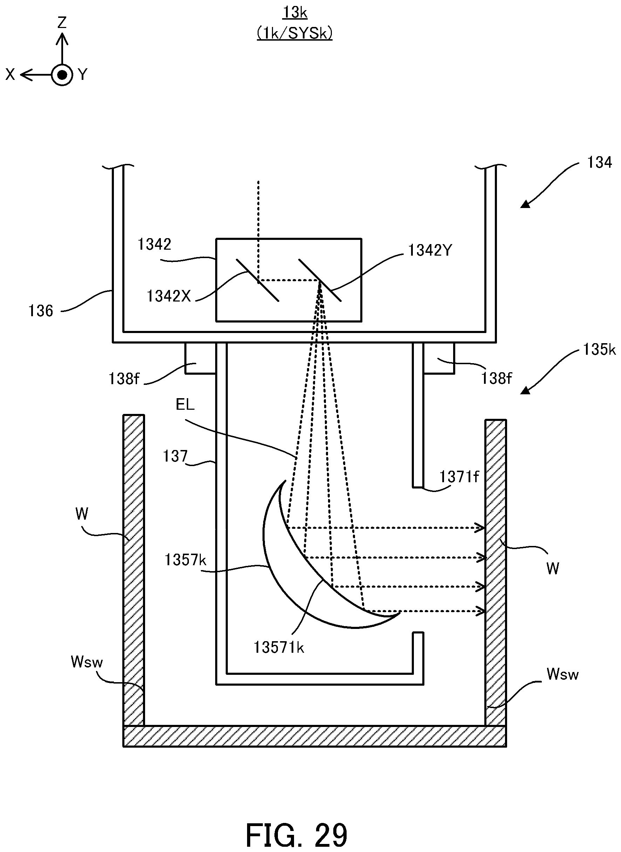

Next, the processing system SYS in an eleventh example embodiment (in the below described description, the processing system SYS in the eleventh example embodiment is referred to as a "processing system SYSk") will be described. The processing system SYSk in the eleventh example embodiment is different from the processing system SYSf in the sixth example embodiment described above in that it includes a processing apparatus 1k instead of the processing apparatus 1f. Other features of the processing system SYSk may be the same as those of the processing system SYSf. The processing apparatus 1k is different from the processing apparatus 1f described above in that it includes a processing head 13k instead of the processing head 13f. Other features of the processing apparatus 1k may be the same as those of the processing apparatus 1f. The processing head 13k is different from the processing head 13f described above in that it includes an objective optical system 135k instead of the objective optical system 135f. Other features of the processing head 13k may be the same as those of the processing head 13f. Therefore, in the following, the objective optical system 135k in the eleventh example embodiment will be described with reference to FIG. 29. FIG. 29 is a cross-sectional view that illustrates a configuration of the objective optical system 135k in the eleventh example embodiment.

As illustrated in FIG. 29, the objective optical system 135k is different from the objective optical system 135f in that it includes a concave mirror 1357k instead of the fθ lens 1351 and the polarized beam splitter 1355f. Other features of the objective optical system 135k may be the same as those of the objective optical system 135f.

The concave mirror 1357k includes a reflection surface 13571k of a concave shape. The workpiece W is irradiated with each of the processing light EL and the measurement light ML from the Galvano mirror 1342 by that each of the lights is reflected by the reflection surface 13571k. At this time, the concave mirror 1357k uses the reflection surface 13571k of the concave shape to condense each of the processing light EL and the measurement light ML on the workpiece W. Therefore, the concave mirror 1357k may serve as a condensing optical system. Thus, when the concave mirror 1357k condenses the processing light EL on the workpiece W, the processing light EL emitted from the concave mirror 1357k is applied to the workpiece W without passing through the other optical members provided for the objective optical system 135k. Therefore, the processing light EL condensed by the concave mirror 1357k does not damage the other optical members provided for the objective optical system 135k. Therefore, the processing system SYSj in the eleventh example embodiment is capable of reducing the possibility that the other optical members provided for the objective optical system 135k is damaged, while achieving the same effect as an effect that is achievable by the processing system SYSf in the sixth example embodiment described above.

The concave mirror 1357k may move the reflection surface 13571k. For example, the concave mirror 1357k may move the reflection surface 13571k along at least one of the θX direction, the θY direction and the θZ direction. That is, the concave mirror 1357k may rotate the reflection surface 13571k around at least one axis of the X axis, the Y axis and the Z axis. In this case, the concave mirror 1357k may also substantially serve as the Galvano mirror 1342. Therefore, the concave mirror 1357k may change the respective irradiation positions of the processing light EL and the measurement light ML on the workpiece W, by moving the reflection surface 13571k. When the concave mirror 1357k can serve as the Galvano mirror 1342 as described above, the state control optical system 134 may not include the Galvano mirror 1342.

Furthermore, at least one of the processing system SYSa in the first example embodiment to the processing system SYSj in the tenth example embodiment described above may include the configuration requirements that are specific to the processing system SYSk in the eleventh example embodiment. The configuration requirements that are specific to the processing system SYSk in the eleventh example embodiment include those related to the concave mirror 1357k.

### (12) Other Modified Examples

In the description described above, the processing apparatus 1 is configured to measure the workpiece W by using the measurement light ML. The processing apparatus 1, however, may not be configured to measure the workpiece W by using the measurement light ML. In this case, the processing apparatus 1 may not include the configuration requirements related to the measurement of the workpiece W using the measurement light ML. For example, the processing apparatus 1 may not include the measurement light source 12, the measurement optical system 132, and the combining optical system 133.

In the description described above, the processing apparatus 1 includes the processing head 13 that is configured to apply each of the processing light EL and the measurement light ML. The processing apparatus 1, however, may separately include: a processing head that is capable of applying the processing light EL, but does not irradiate the measurement light ML, and a measurement head that is capable of irradiating the measurement light ML, but does not irradiate the processing light EL.

In the description described above, the processing apparatus 1 includes one processing head 13 that is configured to apply each of the processing light EL and the measurement light ML. The processing apparatus, however, may include a plurality of processing heads 13. Furthermore, the processing apparatus 1 may include: the processing head 13 that is configured to apply each of the processing light EL and the measurement light ML; and at least one of a processing head that is capable of applying the processing light EL, but does not irradiate the measurement light ML, and a measurement head that is capable of irradiating the measurement light ML, but does not irradiate the processing light EL.

The processing system SYS illustrated in the example embodiments and the modified examples described above may include a display apparatus. This display apparatus may display a predicted shape after processing that is obtained from a target shape of the processing and at least one of the performance and constraints of the processing system SYS. At this time, both the target shape and the predicted shape of the processing may be displayed.

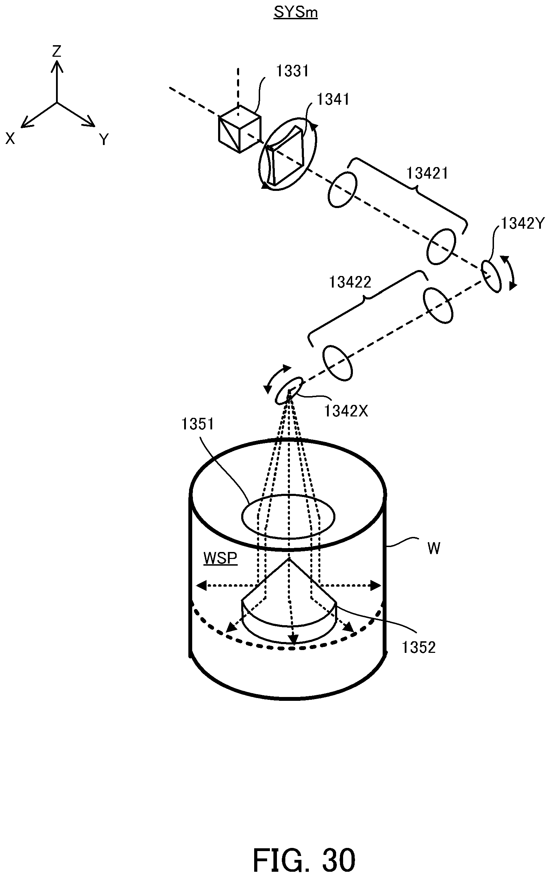

In the description described above, the X scanning mirror 1342X and the Y scanning mirror 1342Y of the Galvano mirror 1342 are arranged adjacently to each other. However, a relay optical system that optically conjugates the X scanning mirror 1342X with the Y scanning mirror 1342Y may be disposed between the X scanning mirror 1342X and the Y scanning mirror 1342Y of the Galvano mirror 1342. FIG. 30 illustrates a part of an optical system of a processing system SYSm including a relay optical system 13422. In FIG. 30, the shape change optical system 1341 of the state control optical system 134 is disposed on the emission side (+Y axis side) of the beam splitter 1331 of the combining optical system 131. The shape change optical system 1341 includes a toric optical member having a toric optical surface (refractive surface). The shape change optical system 1341 is rotatable around the optical axis (Y axis). On the emission side of the shape change optical system 1341 (typically, between the shape change optical system 1341 and the Y scanning mirror 1342Y), a relay optical system 13421 that optically conjugates the shape change optical system 1341 with the Y scanning mirror 1342Y is disposed. Furthermore, as described above, a relay optical system 13422 that optically conjugates the X scanning mirror 1342X with the Y scanning mirror 1342Y is provided between the X scanning mirror 1342X and the Y scanning mirror 1342Y. On the emission side of the X scanning mirror 1342X, the fθ lens 1351 of the objective optical system 135 is provided, and an entrance pupil position of the fθ lens 1351 is substantially coincident with the X scanning mirror 1342X. Therefore, the Y scanning mirror 1342Y and the shape change optical system 1341 are located at positions that are substantially optically conjugated with the entrance pupil position of the fθ lens 1351. Therefore, fluctuation in the propagating directions of the processing light EL and the measurement light ML emitted from the fθ lens 1351 can be made extremely small when the X scanning mirror 1342X and the Y scanning mirror 1342Y are swung (rotated). It is also possible to improve the controllability of the shape change optical system 1341.

Now, as in the example embodiments and the modified examples described above, the conical mirror 1352 is provided on the emission side of the fθ lens 1351, and the processing light EL and measurement light ML from the fθ lens 1352 are reflected by the conical mirror 1352 and are applied to the inner wall of the workpiece W.

Here, at least one of the processing system SYSa in the first example embodiment to the processing system SYSj in the tenth example embodiment described above may include the configuration requirements that are specific to the processing system SYSm illustrated in FIG. 30. The configuration requirements that are specific to the processing system SYSm illustrated in FIG. 30 include those related to the relay optical system 13421 and 13422.

In the example embodiments and the modified examples described above, if there is a possibility that the processing light EL passing through the optical system (especially, the fθ lens 1351) of the processing head 13 heats up the optical system and varies the irradiation position of the processing light EL, the processing system SYS may reduce the fluctuation in the irradiation position of the processing light EL by heat, by using the Galvano mirror 1342. That is, the processing system SYS may correct the irradiation position of the processing light EL by using the Galvano mirror 1342 so as to reduce the fluctuation in the irradiation position of the processing light EL by heat. For example, the processing system SYSmay include a temperature sensor in the fθ lens 1351, and may control the Galvano mirror 1342 based on information about a relationship between a fluctuation amount of the irradiation position and the temperature of the fθ lens 1351 obtained in advance (in a table format or arithmetic expression), and based on the output of the temperature sensor. The fθ lens 1351 may be preheated.

In the description described above, the stage apparatus 2 includes the stage driving system 23. The stage apparatus 2, however, may not include the stage driving system 23. That is, the stage 22 may not be moved. In the description described above, the processing apparatus 1 includes the head driving system 14. The processing apparatus 1, however, may not include the head driving system 14. That is, the processing head 13 may not be moved.

In the description described above, the processing apparatus 1 processes the workpiece W by irradiating the workpiece W with the processing light EL. The processing apparatus 1, however, may process the workpiece W by irradiating the workpiece W with any energy beam that is different from the light (wherein the energy beam may be referred to as a "processing beam"). In this case, the processing apparatus 1 may include a beam source that is configured to generate any energy beam, in addition to or instead of the processing light source 11. An example of any energy beam is a charged particle beam, such as an electron beam and an ion beam. Another example of any energy beam is an electromagnetic wave.

### (13) Supplementary Note

With respect to the example embodiments described above, the following Supplementary Notes will be further disclosed.

### [Supplementary Note 1]

A processing apparatus that is configured to process an object,
the processing apparatus including:
a beam irradiation apparatus that includes a condensing optical system configured to condense an energy beam and that is configured to irradiate the object with the condensed energy beam; and
a beam deflection apparatus that is configured to change an emitting position of the energy beam emitted from the condensing optical system, wherein
when the energy beam is emitted from a first emitting position of the condensing optical system, the beam irradiation apparatus emits the energy beam in a first direction, and
when the energy beam is emitted from a second emitting position of the condensing optical system that is different from the first emitting position, the beam irradiation apparatus emits the energy beam in a second direction that is different from the first direction.

### [Supplementary Note 2]

The processing apparatus according to Supplementary Note 1, wherein
the beam irradiation apparatus includes an emission optical system that reflects toward the object the energy beam from the condensing optical system.

### [Supplementary Note 3]

The processing apparatus according to Supplementary Note 2, wherein
the emission optical system
reflects the energy beam in the first direction when the energy beam is emitted from the first emitting position of the condensing optical system, and
reflects the energy beam in the second direction when the energy beam is emitted from the second emitting position of the condensing optical system.

### [Supplementary Note 4]

The processing apparatus according to Supplementary Note 2 or 3, wherein
the emission optical system reflects the energy beam entering at a first incident position and the energy beam entering at a second incident position that is different from the first incident position, in different directions from each other.

### [Supplementary Note 5]

The processing apparatus according to any one of Supplementary Notes 2 to 4, wherein
the emission optical system includes a reflection surface that is inclined to an optical axis of the condensing optical system.

### [Supplementary Note 6]

The processing apparatus according to Supplementary Note 5, wherein
a first part and a second part that is different from the first part of the reflection surface face in different differently from each other.

### [Supplementary Note 7]

The processing apparatus according to any one of Supplementary Notes 2 to 6, wherein
the emission optical system includes a reflection surface having at least a part of a conical shape.

### [Supplementary Note 8]

The processing apparatus according to Supplementary Note 7, further including a beam shape change apparatus that is configured to change a cross-sectional shape of the energy beam propagating toward a first incident position of the reflection surface, to a first cross-sectional shape, and that is configured to change a cross-sectional shape of the energy beam propagating toward a second incident position of the reflection surface that is different from the first incident position, to a second cross-sectional shape that is different from the first cross-sectional shape.

### [Supplementary Note 9]

The processing apparatus according to Supplementary Note 7 or 8, further including a beam shape change apparatus that is configured to change a cross-sectional shape of the energy beam reflected at a first incident position of the reflection surface and having a first cross-sectional shape, to a second cross-sectional shape, and that is configured to change a cross-sectional shape of the energy beam reflected at a second incident position of the reflection surface that is different from the first incident position and having a third cross-sectional shape, to a fourth cross-sectional shape.

### [Supplementary Note 10]

The processing apparatus according to Supplementary Note 9, wherein
the beam shape change apparatus has a cylindrical refractive surface provided on an object side of the reflection surface of the conical shape.

### [Supplementary Note 11]

The processing apparatus according to any one of Supplementary Notes 2 to 10, including a beam shape change apparatus that is configured to anisotropically change a cross-sectional shape of the energy beam when an incident position of the energy beam entering the emission optical system is changed.

### [Supplementary Note 12]

The processing apparatus according to any one of Supplementary Notes 1 to 11, including a beam shape change apparatus that is configured to change a cross-sectional shape of the energy beam when the propagating direction of the energy beam from the beam deflection apparatus is changed.

### [Supplementary Note 13]

The processing apparatus according to any one of Supplementary Notes 2 to 12, wherein
a positional relationship between the condensing optical system and the emission optical system is fixed.

### [Supplementary Note 14]

The processing apparatus according to any one of Supplementary Notes 1 to 13, including a measurement apparatus that is configured to measure the object by optically receiving a light generated by a measurement light with which the object is irradiated through the beam irradiation apparatus.

### [Supplementary Note 15]

The processing apparatus according to Supplementary Note 14, wherein
the measurement light from the measurement apparatus enters the beam irradiation apparatus through the beam deflection apparatus, and
the light generated on the object by the measurement light enters the measurement apparatus through the beam deflection apparatus.

### [Supplementary Note 16]

The processing apparatus according to Supplementary Note 15, further including a beam shape change apparatus that is configured to change cross-sectional shapes of the energy beam and the measurement light when the propagating directions of the energy beam and the measurement light from the beam deflection apparatus are changed.

### [Supplementary Note 17]

The processing apparatus according to any one of Supplementary Notes 14 to 16, further including an optical path combining member that combines an optical path of the energy beam and an optical path of the measurement light.

### [Supplementary Note 18]

The processing apparatus according to Supplementary Note 17, wherein
a wavelength of the energy beam and a wavelength of the measurement light are different from each other, and
the optical path combining member includes a dichroic mirror.

### [Supplementary Note 19]

A processing apparatus that is configured to process an object,
the processing apparatus including:
a beam irradiation apparatus including: a condensing optical system configured to condense an energy beam; and an emission optical system that changes a propagating direction of the energy beam from the condensing optical system to irradiate the object with it;
an object support apparatus including a support surface on which the object is supported; and
an inclination apparatus that is configured to incline the support surface with respect to the beam irradiation apparatus.

### [Supplementary Note 20]

The processing apparatus according to Supplementary Note 19, wherein
the beam irradiation apparatus irradiates a side surface of a recess or a side surface of a through hole formed in the object with the energy beam from the emission optical system.

### [Supplementary Note 21]

The processing apparatus according to Supplementary Note 20, wherein
the side surface is inclined to the support surface.

### [Supplementary Note 22]

The processing apparatus according to Supplementary Note 21, wherein
the inclination apparatus inclines the side surface based on an inclination angle of the side surface.

### [Supplementary Note 23]

The processing apparatus according to any one of Supplementary Notes 19 to 22, further including a moving apparatus that is configured to move the at least a part of the beam irradiation apparatus in a direction along an optical axis of the condensing optical system.

### [Supplementary Note 24]

The processing apparatus according to Supplementary Note 23, wherein
the beam irradiation apparatus irradiates a side surface of a recess or a side surface of a through hole formed in the object with the energy beam from the emission optical system,
the side surface is inclined to the support surface, and
the moving apparatus moves the at least a part of the beam irradiation apparatus in a direction along the side surface.

The requirements of each example embodiment described above may be combined with each other as appropriate. A part of the requirements of each example embodiment described above may not be used. The requirements of each example embodiment described above may be replaced by those of other example embodiments as appropriate. Furthermore, the disclosures of all publications and United States patents related to an apparatus and the like cited in each embodiment described above are incorporated in the disclosures of the present application by reference if it is legally permitted.

The present invention is not limited to the above-described examples and is allowed to be changed, if desired, without departing from the essence or spirit of the invention which can be read from the claims and the entire specification, and a processing apparatus with such modifications is also intended to be within the technical scope of the present invention.

### Description of Reference Codes

- 1: Processing apparatus
- 13: Processing head
- 131: Processing optical system
- 132: Measurement optical system
- 133: Combining optical system
- 134: State control optical system
- 1341, 1353b: Shape change optical system
- 1342: Galvano mirror
- 1343: Polarization control optical system
- 135: Objective optical system
- 1351: fθ lens
- 1352, 1352e: Conical mirror
- 1352c, 1352c': Pyramid mirror
- 1355f: Polarized beam splitter
- 138f: Housing driving system
- 14: Head driving system
- 2: Stage apparatus
- 22: Stage
- 23: Stage driving system
- 3: Control apparatus
- EL: Processing light
- ML: Measurement light
- SYS: Processing system
- W: Workpiece

## Claims

1. A processing apparatus that is configured to process an object,
the processing apparatus comprising:
a beam irradiation apparatus that is configured to irradiate the object with an energy beam; and
a beam deflection apparatus that is configured to change a propagating direction of the energy beam toward the beam irradiation apparatus, wherein
when the energy beam propagating toward the beam irradiation apparatus from the beam deflection apparatus propagates in a first direction, the beam irradiation apparatus emits the energy beam in a second direction, and
when the energy beam propagating toward the beam irradiation apparatus from the beam deflection apparatus propagates in a third direction that is different from the first direction, the beam irradiation apparatus emits the energy beam in a fourth direction that is different from the second direction.

2. The processing apparatus according to claim 1, wherein
the beam irradiation apparatus includes:
a condensing optical system that condenses the energy beam; and
an emission optical system that reflects toward the object the energy beam from the condensing optical system.

3. The processing apparatus according to claim 2, wherein
the emission optical system
reflects the energy beam in the second direction when the energy beam propagating in the first direction enters the emission optical system through the condensing optical system, and
reflects the energy beam in the fourth direction when the energy beam propagating in the second direction enters the emission optical system through the condensing optical system.

4. The processing apparatus according to claim 2 or 3, wherein
the emission optical system reflects the energy beam entering at a first incident position and the energy beam entering at a second incident position that is different from the first incident position, in different directions from each other.

5. The processing apparatus according to any one of claims 2 to 4, wherein
the emission optical system includes a reflection surface that is inclined to an optical axis of the condensing optical system.

6. The processing apparatus according to claim 5, wherein
a first part and a second part that is different from the first part of the reflection surface face in different differently from each other.

7. The processing apparatus according to any one of claims 2 to 6, wherein
the emission optical system includes a reflection surface having at least a part of a conical shape.

8. The processing apparatus according to claim 7, further comprising a beam shape change apparatus that is configured to change a cross-sectional shape of the energy beam propagating toward a first incident position of the reflection surface, to a first cross-sectional shape, and that is configured to change a cross-sectional shape of the energy beam propagating toward a second incident position of the reflection surface that is different from the first incident position, to a second cross-sectional shape that is different from the first cross-sectional shape.

9. The processing apparatus according to claim 7 or 8, further comprising a beam shape change apparatus that is configured to change a cross-sectional shape of the energy beam reflected at a first incident position of the reflection surface and having a first cross-sectional shape, to a second cross-sectional shape, and that is configured to change a cross-sectional shape of the energy beam reflected at a second incident position of the reflection surface that is different from the first incident position and having a third cross-sectional shape, to a fourth cross-sectional shape.

10. The processing apparatus according to claim 9, wherein
the beam shape change apparatus has a cylindrical refractive surface provided on an object side of the reflection surface of the conical shape.

11. The processing apparatus according to any one of claims 2 to 10, comprising a beam shape change apparatus that is configured to anisotropically change a cross-sectional shape of the energy beam when an incident position of the energy beam entering the emission optical system is changed.

12. The processing apparatus according to any one of claims 2 to 11, wherein
a positional relationship between the condensing optical system and the emission optical system is fixed.

13. The processing apparatus according to any one of claims 1 to 12, comprising a beam shape change apparatus that is configured to change a cross-sectional shape of the energy beam when the propagating direction of the energy beam from the beam deflection apparatus is changed.

14. The processing apparatus according to any one of claims 1 to 13, comprising a measurement apparatus that is configured to measure the object by optically receiving a light generated by a measurement light with which the object is irradiated through the beam irradiation apparatus.

15. The processing apparatus according to claim 14, wherein
the measurement light from the measurement apparatus enters the beam irradiation apparatus through the beam deflection apparatus, and
the light generated on the object by the measurement light enters the measurement apparatus through the beam deflection apparatus.

16. The processing apparatus according to claim 15, further comprising a beam shape change apparatus that is configured to change cross-sectional shapes of the energy beam and the measurement light when the propagating directions of the energy beam and the measurement light from the beam deflection apparatus are changed.

17. The processing apparatus according to any one of claims 14 to 16, further comprising an optical path combining member that combines an optical path of the energy beam and an optical path of the measurement light.

18. The processing apparatus according to claim 17, wherein
a wavelength of the energy beam and a wavelength of the measurement light are different from each other, and
the optical path combining member includes a dichroic mirror.

19. A processing apparatus that is configured to process an object,
the processing apparatus comprising:
a beam irradiation apparatus that includes a condensing optical system configured to condense an energy beam and that is configured to irradiate the object with the condensed energy beam; and
a beam deflection apparatus that is configured to change an emitting position of the energy beam emitted from the condensing optical system, wherein
when the energy beam is emitted from a first emitting position of the condensing optical system, the beam irradiation apparatus emits the energy beam in a first direction, and
when the energy beam is emitted from a second emitting position of the condensing optical system that is different from the first emitting position, the beam irradiation apparatus emits the energy beam in a second direction that is different from the first direction.

20. A processing apparatus that is configured to process an object,
the processing apparatus comprising:
a beam irradiation apparatus that is configured to irradiate the object with an energy beam, and
a polarization state change apparatus that is configured to change a polarization state of the energy beam propagating toward the beam irradiation apparatus, wherein
when the energy beam propagating toward the beam irradiation apparatus from the polarization state change apparatus is in a first polarization state, the beam irradiation apparatus emits the energy beam in a first direction, and
when the energy beam propagating toward the beam irradiation apparatus from the polarization state change apparatus is in a second polarization state that is different from the first polarization state, the beam irradiation apparatus emits the energy beam in a second direction that is different from the first direction.

21. The processing apparatus according to claim 20, wherein
the beam irradiation apparatus includes:
a condensing optical system that condenses the energy beam; and
an emission optical system that emits the energy beam toward the object from the condensing optical system.

22. The processing apparatus according to claim 21, wherein
the emission optical system
reflects the energy beam in the first direction when the energy beam is in the first polarization state, and
transmit the energy beam in the second direction when the energy beam is in the second polarization state.

23. The processing apparatus according to claim 21 or 22, wherein
the emission optical system includes a polarized beam splitter.

24. The processing apparatus according to claim 23, wherein
a polarization split surface of the polarized beam splitter has at least a part of a conical shape.

25. The processing apparatus according to claim 24, further comprising a beam shape change apparatus that is configured to change a cross-sectional shape of the energy beam propagating toward a first incident position of the polarization split surface, to a first cross-sectional shape, and that is configured to change a cross-sectional shape of the energy beam propagating toward a second incident position of the polarization split surface that is different from the first incident position, to a second cross-sectional shape that is different from the first cross-sectional shape.

26. The processing apparatus according to claim 25, wherein
the beam shape change apparatus changes the cross-sectional shape of the energy beam when the polarization state of the energy beam from the polarization state change apparatus is changed.

27. The processing apparatus according to any one of claims 21 to 26, wherein
the emission optical system is rotatable around an optical axis of the condensing optical system or around an axis parallel to the optical axis.

28. The processing apparatus according to claim 27, wherein
the polarization state of the energy beam from the polarization state change apparatus is changed when the emission optical system is rotated.

29. The processing apparatus according to claim 27 or 28, wherein
when the energy beam from the emission optical system is reflected in a third direction, the polarization state change apparatus emits the energy beam in a third polarization state that is different from the first polarization state.

30. The processing apparatus according to any one of claims 21 to 29, wherein
a positional relationship between the condensing optical system and the emission optical system is fixed.

31. The processing apparatus according to any one of claims 20 to 30, further comprising a measurement apparatus that is configured to measure the object by optically receiving, through the beam irradiation apparatus, a light generated by a measurement light with which the object is irradiated through the beam irradiation apparatus.

32. The processing apparatus according to claim 31, wherein
the measurement light from the measurement apparatus enters the beam irradiation apparatus through the polarization state change apparatus, and
the light generated on the object by the measurement light enters the measurement apparatus through the polarization state change apparatus.

33. The processing apparatus according to claim 31 or 32, further comprising an optical path combining member that combines an optical path of the energy beam and an optical path of the measurement light.

34. The processing apparatus according to claim 33, wherein
a wavelength of the energy beam and a wavelength of the measurement light are different from each other, and
the optical path combining member includes a dichroic mirror.

35. A processing apparatus that is configured to process an object,
the processing apparatus comprising:
a beam irradiation apparatus that is configured to irradiate the object with an energy beam; and
a beam state change apparatus that is configured to change a state of the energy beam propagating toward the beam irradiation apparatus, wherein
when the energy beam propagating toward the beam irradiation apparatus from the beam state change apparatus is in a first state, the beam irradiation apparatus emits the energy beam in a first direction, and
when the energy beam propagating toward the beam irradiation apparatus from the beam state change apparatus is in a second state that is different from the first state, the beam irradiation apparatus emits the energy beam in a second direction that is different from the first direction.

36. The processing apparatus according to claim 35, wherein
the beam irradiation apparatus includes:
a condensing optical system that condenses the energy beam; and
an emission optical system that reflects toward the object the energy beam from the condensing optical system.

37. The processing apparatus according to claim 36, wherein
the emission optical system
emits the energy beam in the first direction when the energy beam is in the first state, and
emits the energy beam in the second direction when the energy beam is in the second condition.

38. The processing apparatus according to claim 36 or 37, wherein
the energy beam through the reflection surface is emitted from the emission optical system.

39. The processing apparatus according to any one of claims 36 to 38, wherein
the emission optical system includes a polarized beam splitter.

40. The processing apparatus according to claim 39, wherein
the beam state change apparatus changes a polarization state of the claim energy beam.

41. The processing apparatus according to claim 40, wherein
the polarized beam splitter
reflects the energy beam in the first direction when the energy beam from the beam state change apparatus is in a first polarization state, and
emits the energy beam in the second direction when the energy beam from the beam state change apparatus is in a second polarization state that is different from the first polarization state.

42. The processing apparatus according to any one of claims 36 to 41, wherein
the emission optical system includes a reflection surface,
the energy beam entering at a first part of the reflection surface is reflected in the first direction, and
the energy beam entering at a second part of the reflection surface that is different from the first part is reflected in the second direction.

43. The processing apparatus according to claim 42, wherein
the first part faces in a direction that is different from a direction in which the second part faces.

44. The processing apparatus according to claim 42 or 43, wherein
the energy beam from the beam state change apparatus enters the condensing optical system, and
the beam state change apparatus changes a propagating direction of the energy beam entering the condensing optical system.

45. The processing apparatus according to claim 44, wherein
the reflection surface of the emission optical system
reflects the energy beam in the first direction when the energy beam from the beam state change apparatus propagates in a third direction, and
reflects the energy beam in the second direction when the energy beam from the beam state change apparatus propagates in a fourth direction that is different from the third direction.

46. The processing apparatus according to any one of claims 42 to 45, wherein
the beam state change apparatus changes an emitting position of the energy beam emitted from the condensing optical system.

47. The processing apparatus according to claim 46, wherein
the reflection surface of the emission optical system
reflects the energy beam in the first direction when the energy beam from the beam state change apparatus is emitted from a first emitting position of the condensing optical system, and
reflects the energy beam in the second direction when the energy beam from the beam state change apparatus is emitted from a second emitting position of the condensing optical system that is different from the first emitting position.

48. The processing apparatus according to any one of claims 42 to 47, wherein
the reflection surface has at least a part of a conical shape.

49. The processing apparatus according to claim 48, further comprising a beam shape change apparatus that is configured to change a cross-sectional shape of the energy beam propagating toward the reflection surface of the emission optical system.

50. The processing apparatus according to claim 49, wherein
the beam shape change apparatus
changes the cross-sectional shape of the energy beam to a first cross-sectional shape when the energy beam propagates toward the first part of the reflection surface, and
changes the cross-sectional shape of the energy beam to a second cross-sectional shape that is different from the first cross-sectional shape when the energy beam propagates toward the second part of the reflection surface.

51. The processing apparatus according to claim 49 or 50, wherein
the beam shape change apparatus has a cylindrical refractive surface provided on an object side of the reflection surface of the conical shape.

52. The processing apparatus according to any one of claims 48 to 51, comprising a beam shape change apparatus that is configured to anisotropically change a cross-sectional shape of the energy beam when an incident position of the energy beam entering the emission optical system is changed.

53. The processing apparatus according to any one of claims 42 to 52, wherein
the reflection surface has at least a part of a pyramid shape.

54. The processing apparatus according to claim 53, wherein
the reflection surface includes: a first pyramidal reflection surface having at least a part of the pyramid shape; and a second pyramidal reflection surface having at least a part of the pyramid shape that is disposed opposite to the condensing optical system relative to the first pyramidal reflection surface in an optical axis direction of the condensing optical system, and
each reflection surface of the first pyramidal reflection surface and each reflection surface of the second pyramidal reflection surface face in different directions from each other.

55. The processing apparatus according to any one of claims 36 to 54, wherein
the emission optical system
emits the energy beam in the first direction when the energy beam has a first wavelength, and
emits the energy beam in the second direction when the energy beam has a second wavelength that is different from the first wavelength.

56. The processing apparatus according to any one of claims 36 to 55, wherein
a positional relationship between the condensing optical system and the emission optical system is fixed.

57. The processing apparatus according to any one of claims 35 to 56, further comprising a measurement apparatus that is configured to measure the object by optically receiving, through the beam irradiation apparatus, a light generated by a measurement light with which the object is irradiated through the beam irradiation apparatus.

58. The processing apparatus according to claim 57, wherein
the measurement light from the measurement apparatus enters the beam irradiation apparatus through the beam state change apparatus, and
the light generated on the object by the measurement light enters the measurement apparatus through the beam state change apparatus.

59. The processing apparatus according to claim 57 or 58, further comprising an optical path combining member that combines an optical path of the energy beam and an optical path of the measurement light.

60. The processing apparatus according to claim 59, wherein
a wavelength of the energy beam and a wavelength of the measurement light are different from each other, and
the optical path combining member includes a dichroic mirror.

61. A processing apparatus that is configured to process an object, comprising:
a beam irradiation apparatus including: a condensing optical system that condenses an energy beam; and an emission optical system that changes a propagating direction of the energy beam from the condensing optical system to irradiate the object with it;
an object support apparatus including a support surface on which the object is supported; and
an inclination apparatus that is configured to incline at least a part of the beam irradiation apparatus with respect to the support surface.

62. The processing apparatus according to claim 61, wherein
at least a part of the beam irradiation apparatus inclined by the inclination apparatus includes the emission optical system.

63. The processing apparatus according to claim 62, wherein
at least a part of the beam irradiation apparatus inclined by the inclination apparatus includes at least a part of the emission optical system and the condensing optical system.

64. The processing apparatus according to any one of claims 61 to 63, wherein
the beam irradiation apparatus irradiates a side surface of a recess or a side surface of a through hole formed in the object with the energy beam from the emission optical system.

65. The processing apparatus according to claim 64, wherein
the side surface is inclined to the support surface.

66. The processing apparatus according to claim 65, wherein
the inclination apparatus inclines at least a part of the beam irradiation apparatus based on an inclination angle of the side surface.

67. The processing apparatus according to any one of claims 61 to 66, further comprising a moving apparatus that is configured to move the at least a part of the beam irradiation apparatus in a direction along an optical axis of the condensing optical system.

68. The processing apparatus according to claim 67, wherein
the beam irradiation apparatus irradiates a side surface of a recess or a side surface of a through hole formed in the object, with the energy beam from the emission optical system,
the side surface is inclined to the support surface, and
the moving apparatus moves the at least a part of the beam irradiation apparatus in a direction along the side surface.
